# EUROPÄISCHE PATENTSCHRIFT

(11) **EP 3 322 579 B1**
(45) Veröffentlichungstag und Bekanntmachung des Hinweises auf die Patenterteilung: **02.09.2020**
(21) Anmeldenummer: 16757142.1
(22) Anmeldetag: 15.07.2016
(51) Int. Cl.: B29C 64/118, B29C 64/209, B29C 64/295, B33Y 30/00, B33Y 70/00

(54) **3D-DRUCKVORRICHTUNG**
3-D PRINTING DEVICE
DISPOSITIF D'IMPRESSION 3D

(30) Priorität: 15.07.2015 DE 102015111504
(43) Veröffentlichungstag der Anmeldung: 23.05.2018
(73) Patentinhaber: Apium Additive Technologies GmbH, 76131 Karlsruhe (DE)
(72) Erfinder: HÖLLDORFER, Andreas Johann Walter, 76139 Karlsruhe (DE); POPP, Uwe Wolfgang, 76227 Karlsruhe (DE); PFOTZER, Lars, 76131 Karlsruhe (DE); OKOLO, Brando, 76448 Durmersheim (DE); TRAN-MAI, Tony, 76149 Karlsruhe (DE)
(74) Vertreter: Geitz Truckenmüller Lucht Christ
(86) Internationale Anmeldenummer: PCT/DE2016/100318
(87) Internationale Veröffentlichungsnummer: WO 2017/008789

(56) Entgegenhaltungen:
- EP-A1- 3 002 113
- WO-A1-2015/077053
- US-A1- 2015 056 319

## Beschreibung

Die Erfindung betrifft eine 3D-Druckvorrichtung.

In diesem Zusammenhang ist aus der US-A-20150056319 bereits eine 3-D-Druckvorrichtung, insbesondere eine FFF-Druckvorrichtung, zumindest einer Druckkopfeinheit und mit zumindest einer Zuführvorrichtung, welche in zumindest einem Betriebszustand dazu vorgesehen ist, der zumindest einen Druckkopfeinheit ein Druckmaterial zuzuführen, wobei die Druckkopfeinheit in zumindest einem Betriebszustand dazu vorgesehen ist, ein zumindest teilweise von einem Hochleistungskunststoff, insbesondere einem Hochleistungsthermoplast, gebildetes Druckmaterial aufzuschmelzen. Dabei ist die vorbekannte 3-D-Druckvorrichtung mit einer Grundeinheit versehen, die mit zumindest einer beheizbaren, insbesondere regelbar beheizbaren Druckgrundplatte, auf welche während eines Druckvorgangs aufgedruckt wird, versehen ist.

Außerdem ist aus der WO-A-2015077053 ein Druckmaterial vorbekannt, das für eine 3-D-Druckvorrichtung geeignet ist, wobei zumindest ein Bestandteil des Druckmaterials aus PAEK besteht, während ein anderer Bestandteil dieses Druckmaterials aus einem von dem vorstehend erwähnten PAEK-Material differierenden Material besteht.

Außerdem ist aus der EP-A-3002113 (Stand der Technik nach Art. 54(3) EPÜ) eine 3-D-Druckvorrichtung, insbesondere eine FFF-Druckvorrichtung, mit zumindest einer Druckkopfeinheit und mit zumindest einer Zuführungsvorrichtung, die in zumindest einem Betriebszustand dazu vorgesehen ist, dass der zumindest einen Druckkopfeinheit ein Druckmaterial zugeführt wird, vorbekannt. Dabei ist diese Druckkopfeinheit in zumindest einem Betriebszustand dazu vorgesehen, ein zumindest teilweise von einem Hochleistungskunststoff, insbesondere einem Hochleistungsthermoplast gebildetes Druckmaterial aufzuschmelzen, wobei die 3-D-Druckvorrichtung eine Grundeinheit mit zumindest einer beheizbaren, insbesondere regelbar beheizbaren, Druckgrundplatte, auf welche während eines Druckvorgangs aufgedruckt wird, aufweist. Dabei ist gegenüber dieser Druckgrundplatte eine Flächenheizungseinheit angeordnet, welche dazu vorgesehen ist, ein auf der Druckgrundplatte angeordnetes Druckobjekt aus einer von der Druckgrundplatte differierenden Richtung zumindest partiell zu erhitzen. Dabei sind die zumindest eine Druckgrundplatte und die erwähnte zumindest eine Flächenheizungseinheit relativ zueinander beweglich ausgeführt. Außerdem ist bei dieser vorbekannten Druckvorrichtung eine lokale Heizeinheit vorgesehen die in einem Betriebszustand dazu in der Lage ist, ein Druckobjekt vor dem Aufdruck einer weiteren Schicht durch die zumindest eine Druckkopfeinheit partiell zu erhitzen

Aus der US 2015/0028523 A1 ist bereits eine 3D-Druckvorrichtung, insbesondere eine FFF-Druckvorrichtung, mit zumindest einer Druckkopfeinheit und mit zumindest einer Zuführvorrichtung, welche in zumindest einem Betriebszustand dazu vorgesehen ist, der zumindest einen Druckkopfeinheit ein Druckmaterial zuzuführen, bekannt. In Verbindung mit dieser vorbekannten Druckvorrichtung werden unterschiedliche Hochleistungskunststoffe als Baumaterial vorgeschlagen. Im Übrigen weist diese 3D-Druckvorrichtung eine Zuführvorrichtung auf, mit der Druckmaterial in Form eines Filamentes der Druckkopfeinheit zugeführt wird. Im Weiteren ist diese Zuführvorrichtung mit einem Transportelement versehen, um das Druckmaterial mit einer definierten Vorschubgeschwindigkeit zu bewegen. Außerdem ist diese Druckvorrichtung mit einer beheizbaren Druckgrundplatte versehen.

Aus der US 2013/0327917 A1 ist ebenfalls eine 3D-Druckvorrichtung vorbekannt, bei der der Druckgrundplatte eine Kühlvorrichtung zugeordnet ist.

Auch aus der EP 2 329 935 A1 ist eine 3D-Druckvorrichtung vorbekannt, die eine Kammer zur Aufnahme eines Substratträgers, sowie ein Fördermodul für das Druckmaterial und eine Abgabedüse zur Abgabe der Modelliersubstanz aufweist, sodass es sich hier um einen 3D-Drucker handelt, bei dem die dreidimensionale Druckform während des Druckvorgangs auf den Substratträger aufgebracht wird. Dabei ist dem Substratträger eine Strahlungsheizung zugeordnet, die mit mehreren Temperatursensoren bestückt ist und mehrere separat regelbare Heizungsstrahler umfasst.

Die Aufgabe der Erfindung besteht insbesondere darin, eine gattungsgemäße Vorrichtung mit verbesserten Eigenschaften hinsichtlich der Verarbeitbarkeit technischer Kunststoffe bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer 3D-Druckvorrichtung, insbesondere von einer FFF-Druckvorrichtung, mit zumindest einer Druckkopfeinheit und mit zumindest einer Zuführvorrichtung, welche in zumindest einem Betriebszustand dazu vorgesehen ist, der zumindest einen Druckkopfeinheit ein Druckmaterial zuzuführen.

Es wird vorgeschlagen, dass die Druckkopfeinheit in zumindest einem Betriebszustand dazu vorgesehen ist, ein zumindest teilweise von einem Hochleistungskunststoff, insbesondere einem Hochleistungsthermoplast, gebildetes Druckmaterial aufzuschmelzen. Vorzugsweise ist die Druckkopfeinheit in zumindest einem Betriebszustand dazu vorgesehen, ein zumindest teilweise von einem PAEK, besonders bevorzugt von einem PEEK und/oder PEKK, gebildetes Druckmaterial aufzuschmelzen. Unter einer "3D-Druckvorrichtung" soll in diesem Zusammenhang insbesondere eine Vorrichtung verstanden werden, die zu einem dreidimensionalen Aufbau eines Werkstücks vorgesehen ist. Vorzugsweise soll darunter insbesondere eine Vorrichtung verstanden werden, die zu einem, insbesondere schichtweisen Aufbau eines Werkstücks aus einem Werkstoff vorgesehen ist. Ein Aufbau des Werkstücks erfolgt dabei insbesondere additiv. Besonders bevorzugt soll darunter insbesondere eine computergesteuerte Vorrichtung verstanden werden, welche zu einer Herstellung eines individuellen Werkstücks, insbesondere gemäß einer CAD-Vorlage, vorgesehen ist. Ein Werkstück wird dabei insbesondere durch Aufschmelzen eines Werkstoffs aufgebaut. Ferner soll in diesem Zusammenhang unter einer FFF-Druckvorrichtung insbesondere eine 3D-Druckvorrichtung verstanden werden, bei welcher ein Werkstück mittels "Fused Filament Fabrication", insbesondere mittels "Fused Deposition Modeling" aufgebaut wird. "Fused Filament Fabrication" beschreibt dabei insbesondere ein Fertigungsverfahren aus dem Bereich des Rapid Prototyping, bei dem ein Werkstück schichtweise aus einem Werkstoff, insbesondere aus einem Kunststoff, besonders bevorzugt aus einem Filament, aufgebaut wird.

Des Weiteren soll in diesem Zusammenhang unter einer "Druckkopfeinheit", insbesondere eine vorzugsweise bewegliche Einheit der 3D-Druckvorrichtung verstanden werden, über welche in einem Betrieb direkt Druckmaterial auf eine Druckfläche aufgebracht wird. Vorzugsweise weist die Druckkopfeinheit zumindest eine Düse auf, über welche ein Druckmaterial ausgebracht, insbesondere extrudiert, wird.

Unter einer "Zuführvorrichtung" soll in diesem Zusammenhang insbesondere eine Vorrichtung verstanden werden, die dazu vorgesehen ist, der Druckkopfeinheit während eines Betriebs ein Druckmaterial zuzuführen. Vorzugsweise ist die Zuführvorrichtung zu einer Bereitstellung eines Druckmaterials an der Druckkopfeinheit vorgesehen. Bevorzugt soll darunter insbesondere eine Vorrichtung verstanden werden, die dazu vorgesehen ist, ein Druckmaterial aus einem Speicher zu der Druckkopfeinheit zu transportieren. Ein Transport erfolgt dabei insbesondere in einer definierten Menge und/oder mit einer definierten Vorschubgeschwindigkeit. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Hochleistungskunstoff" soll in diesem Zusammenhang insbesondere ein Kunststoff, vorzugsweise ein Thermoplast, verstanden werden, der eine Wärmeformbeständigkeit von mehr als 150 °C aufweist. Es sind verschiedene, einem Fachmann als sinnvoll erscheinende Hochleistungskunststoffe denkbar, wie beispielsweise Polyaryle, Polyarylate, Polyaramide, Heterocyclische Polymere, Flüssigkristallpolymere und/oder Polyaryletherketone. Ferner soll unter "PAEK" insbesondere die Gruppe der Polyaryletherketone verstanden werden, zu welcher beispielsweise PEEK, PEK, PEKEKK und PEKK gehören.

Durch die erfindungsgemäße Ausgestaltung der 3D-Druckvorrichtung kann insbesondere eine Druckvorrichtung bereitgestellt werden, mittels welcher zumindest Hochleistungskunststoffe, insbesondere Hochleistungsthermoplasten, verarbeitet werden können. Dadurch kann insbesondere erreicht werden, dass auch technische Bauteile und Bauteile, welche einer hohen thermischen Belastung ausgesetzt sind, mittels einer 3D-Druckvorrrichtung hergestellt werden können.

Ferner wird vorgeschlagen, dass die 3D-Druckvorrichtung als eine 3D-Dentaldruckvor-richtung ausgebildet ist. Vorzugsweise kann die 3D-Druckvorrichtung zu einer Herstellung von Dentalobjekten, insbesondere zur Herstellung von dentalen Implantaten, Provisorien, Inlays und/oder Zahnersatz, verwendet werden. Unter einer "3D-Dentaldruckvor-richtung" soll in diesem Zusammenhang insbesondere eine 3D-Druck-vorrichtung verstanden werden, die zu einer Herstellung von Elementen im dentalen Bereich, insbesondere von Dentalobjekten wie beispielsweise Halbzeugen, Zwischenprodukten und/oder Endprodukten vorgesehen ist. Dadurch kann eine vorteilhafte Ausgestaltung der 3D-Druckvorrichtung bereitgestellt werden. Grundsätzlich sind jedoch auch anderen, einem Fachmann als sinnvoll erscheinende Anwendungen der 3D-Druckvorrichtung denkbar.

Insbesondere kann dadurch erreicht werden, dass Dentalobjekte, insbesondere individuelle Dentalobjekte, vorteilhaft schnell und einfach hergestellt werden können.

Ferner wäre dabei zudem denkbar, dass die 3D-Druckvorrichtung zu einer Herstellung von Dentalobjekten, insbesondere zur Herstellung von dentalen Implantaten, Provisorien, Inlays und/oder Zahnersatz, dazu vorgesehen ist, ein Druckmaterial auf eine individuell dreidimensional geformte Druckfläche aufzubringen. Vorzugsweise ist die Druckfläche dabei von einem dentalen Positivabdruckmodell gebildet. Dadurch kann ein Dentalobjekt insbesondere direkt auf ein Abbild eines Gebisses des Patienten gedruckt werden. Bei einem Druck kann dadurch insbesondere die Verwendung von Stützmaterial vermieden werden. Ferner kann dadurch ein Druck insbesondere vorteilhaft schnell realisiert werden. Eine entsprechende mögliche Realisierung kann der deutschen Offenlegungsschrift DE 10 2013 111 387 A1 entnommen werden.

Es wird weiter vorgeschlagen, dass die 3D-Druckvorrichtung eine Grundeinheit mit zumindest einer beheizbaren, insbesondere regelbar beheizbaren, Druckgrundplatte aufweist, auf welche während eines Druckvorgangs aufgedruckt wird. Vorzugsweise ist die Druckgrundplatte in Segmenten regelbar beheizbar. Bevorzugt sind die Segmente der Druckgrundplatte separat ansteuerbar ausgebildet. Besonders bevorzugt sind die Segmente der Druckgrundplatte über eine Steuer- und/oder Regeleinheit separat ansteuerbar. Bevorzugt kann die Druckgrundplatte so über die Steuer- und/oder Regeleinheit unterschiedlich stark erhitzt werden. Hierdurch kann insbesondere eine gezielte Erhitzung erreicht werden. Ferner kann dadurch eine vorteilhaft effiziente Druckgrundplatte erreicht werden. Unter einer "Druckgrundplatte" soll in diesem Zusammenhang insbesondere ein Element oder eine Einheit verstanden werden, das oder die zumindest teilweise einen Untergrund für einen Druck bildet. Vorzugsweise soll darunter insbesondere ein Element oder eine Einheit verstanden werden, auf welchem oder welcher ein zu druckendes Objekt aufgebaut wird. Vorzugsweise wird eine erste Schicht eines Druckobjekts direkt auf die Druckgrundplatte aufgebaut. Bevorzugt ist die Druckgrundplatte von einer rechteckigen insbesondere ebenen Platte gebildet, auf welche während eines Drucks aufgedruckt wird. Grundsätzlich wäre jedoch auch eine unebene, wie beispielsweise gebogene Form der Platte denkbar. Bevorzugt ist eine Temperatur der Druckgrundplatte zumindest steuerbar, besonders bevorzugt regelbar. Dadurch kann vorteilhaft ein zu druckendes Objekt von einer Basis her erwärmt werden. Hierdurch kann ein zu schnelles Abkühlen eines zu druckenden Objekts vermieden werden.

Ferner wird vorgeschlagen, dass die 3D-Druckvorrichtung zumindest eine gegenüber der Druckgrundplatte angeordnete Flächenheizungseinheit aufweist, welche dazu vorgesehen ist, ein auf der Druckgrundplatte angeordnetes Druckobjekt aus einer von der Druckgrundplatte differierenden Richtung zumindest partiell zu erhitzen. Vorzugsweise ist die Flächenheizungseinheit dazu vorgesehen, ein Druckobjekt von einer Seite und/oder besonders bevorzugt von oben zumindest partiell zu erhitzen. Darunter, dass "die Flächenheizungseinheit gegenüber der Druckgrundplatte angeordnet ist", soll in diesem Zusammenhang insbesondere verstanden werden, dass zwischen der Druckgrundplatte und der Flächenheizungseinheit zumindest teilweise der Druckbereich angeordnet ist, in welchem ein Druckobjekt während eines Betriebs der 3D-Druckvorrichtung aufgebaut wird. Vorzugsweise soll darunter insbesondere verstanden werden, dass die Flächenheizungseinheit zumindest teilweise in einem Bereich angeordnet ist, der sich senkrecht zu einer Druckfläche der Druckgrundplatte nach oben erstreckt. Ferner soll in diesem Zusammenhang unter einer "Flächenheizungseinheit" insbesondere eine Einheit verstanden werden, die zumindest teilweise zu einer flächigen Erzeugung einer Heizleistung vorgesehen ist. Vorzugsweise wird eine Heizleistung auf einer Fläche von zumindest 10 cm², vorzugsweise von zumindest 50 cm² und besonders bevorzugt von zumindest 100 cm² erzeugt. Bevorzugt soll darunter eine Einheit verstanden werden, die zu einer Erzeugung einer flächigen Heizstrahlung vorgesehen ist. Besonders bevorzugt ist eine Heizstrahlung dabei zumindest im Wesentlichen senkrecht zu einer Fläche der Flächenheizungseinheit ausgerichtet. Grundsätzlich sind jedoch auch andere, einem Fachmann als sinnvoll erscheinende Ausgestaltungen der Flächenheizungseinheit denkbar. Grundsätzlich wäre auch denkbar, dass die Flächenheizungseinheit als eine Mikrowellenheizeinheit ausgebildet ist, welche zu einer gezielten Aussendung von Mikrowellen zu einer partiellen Erhitzung des Druckobjekts vorgesehen ist. Darunter, dass "die Flächenheizungseinheit dazu vorgesehen ist, ein Druckobjekt partiell zu erhitzen", soll in diesem Zusammenhang insbesondere verstanden werden, dass die Flächenheizungseinheit dazu vorgesehen ist, zumindest Teilbereiche eines bereits gedruckten Teils des Druckobjekts zu erhitzen. Vorzugsweise ist die Flächenheizungseinheit dazu vorgesehen, einen Teilbereich des Druckobjekts gezielt gegenüber einem differierenden Teilbereich zu erhitzen.

Dabei kann unter "erhitzen" jedoch auch lediglich das Halten einer Temperatur des Teilbereichs und/oder das Verhindern eines schnellen Absinkens einer Temperatur des Teilbereichs verstanden werden. Dadurch kann vorteilhaft eine Temperatur des Druckobjekts gezielt beeinflusst werden. Vorzugsweise kann dadurch vorteilhaft eine Temperatur des Druckobjekts an einen Druckprozess angepasst werden. Insbesondere kann dadurch gezielt die Temperatur einzelner Teilbereiche des Druckobjekts gesteuert werden. Insbesondere kann dadurch eine vorteilhaft gleichmäßige Wärmeverteilung des Druckobjekts auch in einer Druckkammer erreicht werden. Vorzugsweise kann dadurch verhindert werden, dass Temperaturdifferenzen auftreten, welche zu einer Verformung des Druckobjekts führen. Ferner können makroskopische Deformationen des Druckobjekts unterdrückt werden, indem ein Erstarrungsprozess gezielt gesteuert wird. Zudem kann eine homogene Farbe des Druckobjekts, insbesondere ähnlich einer Ausgangsfarbe des Druckmaterials, erreicht werden. Insbesondere können vorteilhafte mechanische Eigenschaften des Druckobjekts erreicht werden.

Des Weiteren wird vorgeschlagen, dass die zumindest eine Druckgrundplatte und die zumindest eine Flächenheizungseinheit relativ zueinander beweglich ausgeführt sind. Vorzugsweise ist die Flächenheizungseinheit relativ zu der Druckgrundplatte beweglich ausgeführt. Besonders bevorzugt ist die Flächenheizungseinheit relativ zu der Druckgrundplatte und die Druckgrundplatte relativ zu der Flächenheizungseinheit beweglich ausgeführt. Vorzugsweise ist die Flächenheizungseinheit relativ zu der Druckkopfeinheit positionsfest angeordnet. Es wäre jedoch auch denkbar, dass die Flächenheizungseinheit unabhängig von der Druckkopfeinheit beweglich ausgeführt ist. Besonders bevorzugt ist die Flächenheizungseinheit jedoch fest mit der Druckkopfeinheit verbunden. Dadurch kann eine Erhitzung des Druckobjekts durch die Flächenheizungseinheit, insbesondere unabhängig von einer Position der Druckgrundplatte erfolgen. Bei einer positionsfesten Anordnung der Flächenheizungseinheit relativ zu der Druckkopfeinheit kann insbesondere vermieden werden, dass eine Bewegung der Druckkopfeinheit eine Heizwirkung der Flächenheizungseinheit, insbesondere durch ein Verdecken, negativ beeinflusst. Insbesondere kann dadurch eine vorteilhaft flächige Flächenheizungseinheit realisiert werden.

Des Weiteren wird vorgeschlagen, dass die Zuführvorrichtung dazu vorgesehen ist, das Druckmaterial in Form eines Filaments der Druckkopfeinheit zuzuführen.

Unter einem "Filament" soll in diesem Zusammenhang insbesondere ein faden- und/oder stabförmig vorliegender Werkstoff verstanden werden. Vorzugsweise soll darunter insbesondere ein Werkstoff, insbesondere ein Kunststoff, verstanden werden, der in einer fadenähnlichen Form vorliegt, daher insbesondere eine Quererstreckung aufweist, die um ein Vielfaches geringer ist als eine Längserstreckung entlang einer Mittelfaser. Vorzugsweise beträgt eine Quererstreckung weniger als 1,5cm, vorzugsweise weniger als 1cm und besonders bevorzugt weniger als 0,5cm. Bevorzugt weist das Filament einen zumindest annähernd runden Querschnitt auf. Besonders bevorzugt liegt das Filament in einer auf einer Spule aufgewickelten Form vor. Dabei soll unter "um ein Vielfaches geringer" insbesondere zumindest 10-mal, vorzugsweise zumindest 50-mal und besonders bevorzugt zumindest 100-mal geringer verstanden werden. Grundsätzlich muss jedoch berücksichtigt werden, dass sich eine Längserstreckung des Filaments entlang der Mittelfaser vorzugsweise während eines Betriebs der 3D-Druckvorrichtung verringert, sodass ein Verhältnis der Quererstreckung zu einer Längserstreckung vorzugsweise auf einen Ursprungszustand bezogen ist. Dadurch kann insbesondere eine besonders vorteilhafte Zuführung erreicht werden. Vorzugsweise kann dadurch vorteilhaft konstruktiv einfach eine Zuführmenge und/oder eine Zuführgeschwindigkeit gesteuert werden. Ferner kann dadurch vorteilhaft schnell ein Aufschmelzen des Druckmaterials erreicht werden.

Es wird ferner vorgeschlagen, dass die Zuführvorrichtung zumindest ein Transportelement aufweist, das in zumindest einem Betriebszustand zu einer Bewegung des Druckmaterials mit einer definierten Vorschubgeschwindigkeit vorgesehen ist. Vorzugsweise ist das Transportelement zumindest teilweise als eine Transportrolle ausgebildet. Besonders bevorzugt kann über die Vorschubgeschwindigkeit der Zuführvorrichtung eine Zuführmenge von Druckmaterial eingestellt werden. Unter einem "Transportelement" soll in diesem Zusammenhang insbesondere ein Element der Zuführvorrichtung verstanden werden, welches zu einem direkten Transport des Druckmaterials vorgesehen ist. Vorzugsweise soll darunter ein Element verstanden werden, das zu einer Bereitstellung eines Vorschubs des Druckmaterials in Richtung der Druckkopfeinheit vorgesehen ist. Besonders bevorzugt ist das Transportelement dazu vorgesehen, das Druckmaterial, insbesondere in Form eines Filaments, aus einem Speicher, insbesondere einer Spule, zu ziehen und zu der Druckkopfeinheit zu fördern. Vorzugsweise ist das Transportelement zu einer Bereitstellung eines Druckmaterials an der Druckkopfeinheit vorgesehen. Dadurch kann zuverlässig eine Zufuhr von Druckmaterial gewährleistet werden. Ferner kann dadurch insbesondere eine Menge eines zugeführten Druckmaterials beeinflusst werden. Es kann ein zuverlässiger Druckprozess gewährleistet werden.

Zudem wird vorgeschlagen, dass die Grundeinheit zumindest eine Kühlvorrichtung aufweist, die zu einer aktiven Abkühlung der Druckgrundplatte vorgesehen ist. Vorzugsweise ist die Kühlvorrichtung zu einer schockartigen Abkühlung der Druckgrundplatte vorgesehen. Bevorzugt kann über die Kühlvorrichtung ein Abkühlverlauf der Druckgrundplatte zumindest beeinflusst, besonders bevorzugt gesteuert werden. Unter einer "Kühlvorrichtung" soll in diesem Zusammenhang insbesondere eine Vorrichtung verstanden werden, welche zu einer aktiven Kühlung der Druckgrundplatte vorgesehen ist. Vorzugsweise soll darunter eine Vorrichtung verstanden werden, die, insbesondere nach einer Deaktivierung einer Beheizung der Druckgrundplatte, zu einer aktiven Senkung einer Temperatur der Druckgrundplatte vorgesehen ist. Eine Kühlung geht dabei insbesondere über eine reine Wärmeabgabe an eine Umgebung hinaus. Es sind dabei verschiedene, einem Fachmann als sinnvoll erscheinende Methoden zu einer Kühlung denkbar, wie insbesondere eine Flüssigkeitskühlung, wie beispielsweise eine Wasser- oder Ölkühlung, und/oder eine Gaskühlung, wie beispielsweise Luft- oder Kohlenstoffkühlung. Dadurch kann vorteilhaft ein schnelles Abkühlen der Druckgrundplatte erreicht werden. Insbesondere kann dadurch aktiv ein Abkühlverlauf der Kühlvorrichtung beeinflusst, insbesondere gesteuert werden. Dadurch kann insbesondere beispielsweise ein Ablösen eines Druckobjekts erreicht werden. Ferner kann dadurch beispielsweise ein "Warping" des Druckobjekts durch eine falsche Abkühlung vermieden werden. Ein Abkühlverlauf kann vorteilhaft an ein Druckobjekt angepasst werden. Dabei soll unter "Warping" insbesondere ein Verziehen des Druckobjekts nach einem Druck verstanden werden. Das Warping entsteht insbesondere aufgrund von ungleichmäßig verteilten Eigenspannungen im Filament als Folge unterschiedlicher Abkühlgeschwindigkeiten und -temperaturen der einzelnen Schichten. Insbesondere wird das Warping durch die Schrumpfung des Kunststoffs während des Abkühlvorgangs verursacht.

Es wird ferner vorgeschlagen, dass die zumindest eine Flächenheizungseinheit mehrere Heizelemente aufweist, die getrennt voneinander ansteuerbar ausgebildet sind. Vorzugsweise sind die Heizelemente von einer Steuer- und/oder Regeleinheit separat ansteuerbar ausgebildet.

Bevorzugt sind die Heizelemente der Flächenheizungseinheit zumindest teilweise in einer Ebene, vorzugsweise in einer Ebene parallel zu der Druckgrundplatte, angeordnet. Unter einem "Heizelement" soll in diesem Zusammenhang insbesondere ein Element der Flächenheizungseinheit verstanden werden, welches zu einer direkten Erzeugung einer Heizleistung vorgesehen ist. Vorzugsweise soll darunter insbesondere ein Element der Flächenheizungseinheit verstanden werden, welches zu einer direkten Erzeugung einer Heizstrahlung vorgesehen ist. Bevorzugt bilden die Heizelemente Segmente der Flächenheizungseinheit. Besonders bevorzugt sind die Heizelemente zumindest teilweise elektrisch getrennt voneinander ausgebildet. Vorzugsweise weist jedes der Heizelemente ein separates Heizmittel auf. Grundsätzlich wäre jedoch auch denkbar, dass die Heizelemente durch gezielte Ansteuerung der gesamten Flächenheizungseinheit getrennt voneinander angesteuert werden. Dadurch kann die Flächenheizungseinheit vorteilhaft variabel genutzt werden. Insbesondere kann dadurch eine sehr präzise Erhitzung des Druckobjekts erreicht werden. Ferner kann dadurch zudem eine vorteilhaft effiziente Flächenheizungseinheit bereitgestellt werden. Insbesondere bei einer Bewegung der Flächenheizungseinheit relativ zu der Druckgrundplatte kann trotz allem eine gezielte Erhitzung des Druckobjekts erreicht werden. Es kann eine unerwünschte Erhitzung einer Umgebung vermieden werden.

Es wird weiter vorgeschlagen, dass die 3D-Druckvorrichtung zumindest eine Lokalheizeinheit aufweist, welche in einem Betriebszustand dazu vorgesehen, ein Druckobjekt vor dem Aufdruck einer weiteren Schicht durch die Druckkopfeinheit partiell zu erhitzen. Vorzugsweise ist die Lokalheizeinheit in einem Betriebszustand dazu vorgesehen, zur Verbesserung der Adhäsion zwischen den einzelnen Druckschichten eine oberste Druckschicht des Druckobjekts vor dem Aufdruck einer weiteren Schicht durch die Druckkopfeinheit partiell zu erhitzen. Dabei wäre zudem insbesondere denkbar, dass gezielt auf die Erhitzung durch die Lokaleinheit partiell verzichtet wird, um gezielt eine Adhäsion zu vermeiden. Dadurch könnte insbesondere erreicht werden, dass Schichten direkt aufeinander gedruckt werden können, ohne dass die Schichten miteinander verschmelzen bzw. verschmelzt sind. Unter einer "Lokalheizeinheit" soll in diesem Zusammenhang insbesondere eine Einheit verstanden werden, die zumindest teilweise zu einer punktuellen Erzeugung einer Heizleistung vorgesehen ist, wobei unter punktuell insbesondere auf einer Fläche von weniger als 10 cm², vorzugsweise von weniger als 5 cm² und besonders bevorzugt von weniger als 1 cm² verstanden werden soll. Bevorzugt soll darunter eine Einheit verstanden werden, die zu einer Erzeugung einer punktuellen Heizstrahlung vorgesehen ist. Besonders bevorzugt ist eine Heizstrahlung dabei zumindest im Wesentlichen in eine definierte Richtung ausgerichtet. Grundsätzlich wäre auch denkbar, dass die Lokalheizeinheit als eine Lokal-Mikrowellenheizeinheit ausgebildet ist, welche zu einer gezielten Aussendung von Mikrowellen zu einer partiellen Erhitzung des Druckobjekts vorgesehen ist. Dadurch kann eine sehr präzise Erhitzung des Druckobjekts erreicht werden. Ferner kann dadurch zudem eine vorteilhaft Effiziente Heizeinheit bereitgestellt werden. Insbesondere kann das Druckobjekt dadurch vorteilhaft partiell erhitzt werden. Zudem kann dadurch vorteilhaft zuverlässig eine Verbindung der Schichten erreicht werden. Insbesondere aufgrund der hohen Schmelztemperaturen von Hochleistungskunststoffen muss zur Gewährleistung eines Zusammenschmelzens der Schichten eine sehr hohe Temperatur der obersten Schicht bereitgestellt werden.

Vorzugsweise wird vorgeschlagen, dass die zumindest eine Lokalheizeinheit an der Druckkopfeinheit angeordnet ist. Besonders bevorzugt ist die Lokalheizeinheit drehbar um die Druckkopfeinheit angeordnet. Durch eine Anordnung der Lokalheizeinheit an der Druckkopfeinheit kann insbesondere ermöglicht werden, dass die Lokalheizeinheit der Druckkopfeinheit vorrauseilt. Durch ein Vorrauseilen kann wiederum erreicht werden, dass eine oberste Schicht des Druckobjekts unmittelbar vor einem Aufbringen einer weiteren Schicht erhitzt, besonders bevorzugt angeschmolzen wird. Insbesondere kann dadurch sehr präzise eine Temperatur der Schicht eingestellt werden. Ist die Lokalheizeinheit drehbar um die Druckkopfeinheit angeordnet, kann eine Position der Lokalheizeinheit vorteilhaft an eine Druckrichtung angepasst werden. Dadurch kann insbesondere zuverlässig erreicht werden, dass die Lokalheizeinheit der Druckkopfeinheit vorrauseilt. Ferner kann dadurch insbesondere erreicht werden, dass die Lokaleinheit gezielt über eine oberste Schicht verdreht werden kann, um eine gezielte Erhitzung zu erreichen. Die Lokalheizeinheit kann grundsätzlich sowohl mit der Flächenheizungseinheit als auch ohne die Flächenheizungseinheit verwendet werden.

Ferner wird vorgeschlagen, dass die Druckkopfeinheit zumindest eine Düse aufweist. Vorzugsweise weist die Düse an einer Innenseite zumindest teilweise eine Härte von zumindest 200 HV 10, vorzugsweise von zumindest 600 HV 10, bevorzugt von zumindest 1200 HV 10 und besonders bevorzugt von zumindest 2000 HV 10 auf.

Bevorzugt weist die Düse der Druckkopfeinheit auf einer Innenseite eine Beschichtung mit einer Härte von zumindest 200 HV 10, vorzugsweise von zumindest 600 HV 10, bevorzugt von zumindest 1200 HV 10 und besonders bevorzugt von zumindest 2000 HV 10 auf. Besonders bevorzugt weist die zumindest eine Düse der Druckkopfeinheit auf einer Innenseite eine Beschichtung auf, die zumindest teilweise aus einer Keramik, wie beispielsweise Wolframcarbid besteht. Grundsätzlich sind jedoch auch andere, einem Fachmann als sinnvoll erscheinende Materialien denkbar. Unter einer Härte von zumindest 200 HV 10 soll in diesem Zusammenhang insbesondere verstanden werden, dass ein Härtewert einer Innenseite der Düse zumindest 200 beträgt, wobei die Härteprüfung nach Vickers mit einer Prüfkraft von 10kp, daher von ca. 98,07N, durchzuführen ist. Dadurch kann insbesondere ein vorteilhaft geringer Verschleiß der Druckkopfeinheit, insbesondere der Düse der Druckkopfeinheit, erreicht werden. Vorzugsweise kann dadurch insbesondere erreicht werden, dass eine Größe und/oder eine Form der Auslassöffnung der Düse der Druckkopfeinheit über eine Dauer eines Betriebs zumindest im Wesentlichen konstant bleibt. Insbesondere bei der Verwendung von Zusätzen bei einem Druckmaterial, wie beispielsweise von Fasern, insbesondere Kohlefasern, kann eine vorteilhaft hohe Standzeit der Druckkopfeinheit erreicht werden.

Des Weiteren wird vorgeschlagen, dass die 3D-Druckvorrichtung eine aktive Kühleinheit aufweist, welche zu einer aktiven Kühlung zumindest eines temperaturkritischen Bauteils vorgesehen ist. Vorzugsweise ist die aktive Kühleinheit als eine aktive Wasserkühleinheit ausgebildet. Bevorzugt ist die aktive Kühleinheit dazu vorgesehen, temperaturkritische Bauteile, welche sich in einer Umgebung, insbesondere in einer direkten Umgebung, der Druckkopfeinheit befinden, zu kühlen. Unter einer "aktiven Kühleinheit" soll in diesem Zusammenhang insbesondere eine Einheit verstanden werden, die zu einer aktiven Kühlung zumindest eines Bauteils vorgesehen ist. Vorzugsweise soll darunter eine Einheit verstanden werden, die aktiv zu einer Abfuhr von Wärme von dem zu kühlenden Bauteil vorgesehen ist. Besonders bevorzugt ist die Einheit dazu vorgesehen, aktiv eine Temperatur eines Bauteils zu senken. Eine Kühlung geht dabei insbesondere über eine reine Wärmeabgabe an eine Umgebung hinaus. Es sind dabei verschiedene, einem Fachmann als sinnvoll erscheinende Methoden zu einer Kühlung denkbar, wie insbesondere eine Flüssigkeitskühlung, wie beispielsweise eine Wasser- oder Ölkühlung, und/oder eine Gaskühlung, wie beispielsweise Luft- oder Kohlenstoffkühlung. Dadurch kann vorteilhaft eine zu starke Erhitzung temperaturkritischer Bauteile verhindert werden.

Insbesondere kann dadurch verhindert werden, dass Bauteile aufgrund der hohen Temperaturen beschädigt werden und/oder eine Genauigkeit der 3D-Druckvorrichtung aufgrund von Wärmeausdehnungen beeinträchtigt wird.

Es wird ferner vorgeschlagen, dass die aktive Kühleinheit dazu vorgesehen ist, zumindest eine an der Druckkopfeinheit angeordnete Sensoreinheit aktiv zu kühlen. Vorzugsweise ist die aktive Kühleinheit dazu vorgesehen, einen an der Druckkopfeinheit angeordneten Vermessungssensor zu kühlen. Bevorzugt ist die aktive Kühleinheit dazu vorgesehen, eine an der Druckkopfeinheit angeordnete Sensoreinheit zu kühlen, welche als ein Kalibrierungssensor ausgebildet ist. Besonders bevorzugt ist der Kalibrierungssensor zu einer Kalibrierung vorgesehen. Der Kalibrierungssensor ist hierfür insbesondere dazu vorgesehen, die Druckgrundplatte und/oder ein Druckobjekt zu vermessen, da, um eine gute Druckqualität zu gewährleisten, eine Ebenheit des Druckbetts, insbesondere der Druckgrundplatte, gewährleistet sein muss. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, insbesondere durch Erzeugen und Aussenden eines elektrischen Messsignals, und/oder passiv, insbesondere durch eine Erfassung von Eigenschaftsänderungen eines Sensorbauteils, stattfinden kann. Es sind verschiedene, einem Fachmann als sinnvoll erscheinende Sensoreinheiten denkbar. Dadurch kann vorteilhaft erreicht werden, dass Sensoreinheiten, insbesondere temperaturkritische Sensoreinheit vorteilhaft an der Druckkopfeinheit positioniert werden können. Dadurch können insbesondere vorteilhafte Messpositionen bereitgestellt werden. Ferner kann dadurch erreicht werden, dass die Sensoreinheit in einem optimalen Temperaturbereich betrieben wird. Hierdurch kann ein vorteilhaft genaues Messergebnis erreicht werden.

Zudem oder alternativ wäre jedoch auch denkbar, dass die 3D-Druckvorrichtung eine Kühleinheit aufweist, welche zu einer Bereitstellung einer Sperrschicht zwischen einem Warm- und einem Kaltbereich in zumindest einem Betriebszustand dazu vorgesehen ist, zwischen dem Warmbereich und dem Kaltbereich einen definierten Gasstrom zu erzeugen. Vorzugsweise ist die Kühleinheit dazu vorgesehen, zwischen dem Warmbereich und dem Kaltbereich einen definierten Luftstrom zu erzeugen. Bevorzugt ist die Kühleinheit dazu vorgesehen einen Kaltbereich zumindest teilweise gegenüber dem Warmbereich thermisch zu isolieren.

Dabei wäre insbesondere denkbar, dass temperaturkritische Bauteile zumindest teilweise in einem Kaltbereich angeordnet werden, um eine separate Kühlung zu vermeiden. Dabei soll unter einem "Warmbereich" insbesondere ein Bereich der 3D-Druckvorrichtung um das Druckobjekt herum verstanden werden. Vorzugsweise soll darunter insbesondere ein Bereich der 3D-Druckvorrichtung verstanden werden, in welchem eine hohe Temperatur benötigt wird. Besonders bevorzugt soll darunter ein Bereich zwischen der Druckgrundplatte und der Druckkopfeinheit und/oder der Flächenheizungseinheit verstanden werden. Dadurch kann insbesondere gezielt ein Warmbereich von einem Kaltbereich getrennt werden. Insbesondere kann dadurch vorteilhaft ein hoher Wärmeverlust in dem Warmbereich vermieden werden.

Es wird weiter vorgeschlagen, dass die 3D-Druckvorrichtung eine Sensoreinheit aufweist, welche zu einer direkten Messung eines Drucks des Druckmaterials in der zumindest einen Druckkopfeinheit vorgesehen ist. Vorzugsweise ist die Sensoreinheit zu einer direkten Messung eines relativen Drucks des Druckmaterials in der zumindest einen Druckkopfeinheit relativ zu einem Umgebungsdruck vorgesehen. Bevorzugt ist die Sensoreinheit als ein Drucksensor ausgebildet. Unter einem "Druck" soll in diesem Zusammenhang ein physikalischer Druck verstanden werden. Vorzugsweise soll darunter insbesondere ein Wert einer senkrecht auf eine Fläche mit dem Flächeninhalt A wirkenden Kraft mit dem Betrag F verstanden werden, wobei der Druck aus dem Quotienten gebildet ist. Ferner soll in diesem Zusammenhang unter einem "Drucksensor" insbesondere eine Sensoreinheit verstanden werden, die dazu vorgesehen ist, zumindest eine Kenngröße eines physikalischen Drucks aufzunehmen, wobei die Aufnahme aktiv, insbesondere durch Erzeugen und Aussenden eines elektrischen Messsignals, und/oder passiv, insbesondere durch eine Erfassung von Eigenschaftsänderungen eines Sensorbauteils, stattfinden kann. Dabei sind verschiedene technische Ausgestaltungen wie beispielsweise als Passivdrucksensor, Relativdrucksensor, Absolutdrucksensor und/oder Differenzdrucksensor denkbar.

Ferner sind verschiedene, einem Fachmann als sinnvoll erscheinende Drucksensoren denkbar wie beispielsweise piezoresistive Drucksensoren und/oder piezoelektrische Drucksensoren. Dadurch kann vorteilhaft ein Druck in der Druckkopfeinheit erfasst werden. Vorzugsweise kann dadurch ein Druck eines Druckmaterials erfasst werden. Bevorzugt kann dadurch vorteilhaft abhängig von einem Druck des Druckmaterials ein Druckprozess angepasst werden. Zudem kann dadurch vorteilhaft auch ein Druck angepasst, gesteuert und/oder geregelt werden.

Ferner wird vorgeschlagen, dass die Sensoreinheit zumindest ein Sensorelement aufweist, welches in einer Düse der Druckkopfeinheit angeordnet ist. Vorzugsweise ist ein Messmittel der Sensoreinheit in der Düse der Druckkopfeinheit angeordnet. Dadurch kann vorteilhaft ein Druck des Druckmaterials direkt in der Düse gemessen werden. Dadurch kann insbesondere ein besonders zuverlässiges Messergebnis erreicht werden. Es kann insbesondere ein gegenüber einer Berechnung des Drucks verbessertes Messergebnis erreicht werden.

Des Weiteren wird vorgeschlagen, dass die 3D-Druckvorrichtung eine Steuer- und/oder Regeleinheit aufweist, welche zu einer Steuerung und/oder Regelung zumindest eines Druckparameters vorgesehen ist. Vorzugsweise ist die Steuer- und/oder Regeleinheit zu einer Steuerung und/oder Regelung zumindest eines Druckparameters in Echtzeit vorgesehen. Die Steuer- und/oder Regeleinheit dient insbesondere einer optimalen Anpassung von Druckparametern an einen Druckprozess. Die Steuer- und/oder Regeleinheit ist dazu insbesondere zu einer Berechnung einer Gleichung zu einer Prozessqualität vorgesehen. Vorzugsweise ist die Steuer- und/oder Regeleinheit dazu vorgesehen, abhängig von einer gewünschten Qualität des Druckobjekts und/oder einer gewünschten Druckgeschwindigkeit eine Druckgeschwindigkeit, eine Temperatur der Druckkopfeinheit, eine Temperatur der Druckgrundplatte, eine Temperatur des Druckobjekts oder dessen Umgebung und/oder ein Druck des Druckmaterials in der Düse anzupassen.

Um ein Prozesssteuerungswerkzeug für die 3D-Druckvorrichtung zu entwickeln, wird hierbei insbesondere ein numerischer Ansatz vorgeschlagen, welcher die Zusammenhänge zwischen dem Druckprozess selbst und den Materialeigenschaften des Druckmaterials berücksichtigt. Diese Zusammenhänge werden dabei vorzugsweise mit Gleichungen beschrieben, welche darstellen, wie die Parameter die Materialeigenschaften des gedruckten Druckmaterials beeinflussen. Die Gleichungen werden anschließend bevorzugt in eine einzige Gleichung mit Hilfe von mehreren Regressionsverfahren vereinheitlicht. Über diese Gleichung kann damit eine Prozesskontrolle sowie eine Qualitätssicherung erreicht werden.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Dadurch kann insbesondere eine vorteilhafte Steuerung und/oder Regelung zumindest eines Druckparameters erreicht werden. Vorzugsweise kann dadurch insbesondere eine Kontrolle des Druckprozesses erreicht werden. Insbesondere kann dadurch ein Druckprozess gezielt gesteuert werden.

Zudem wird vorgeschlagen, dass die Druckkopfeinheit zumindest eine Düse mit zumindest einem Strukturelement aufweist, welches zu einer Erzeugung einer zumindest teilweise turbulenten Strömung in der Düse vorgesehen ist. Vorzugsweise ist das Strukturelement in einem Innenraum der Düse angeordnet. Bevorzugt ist das Strukturelement an einer Innenseite der Düse angeordnet. Besonders bevorzugt ist das Strukturelement von einer Spiralstruktur gebildet, welche das Druckmaterial spiralförmig durch die Düse führt bzw. eine spiralförmige Bewegung des Druckmaterials in der Düse bewirkt. Unter einem "Strukturelement" soll in diesem Zusammenhang insbesondere ein Element verstanden werden, welches zu einer Erzeugung einer zumindest teilweise turbulenten Strömung des Druckmaterials in der Düse vorgesehen ist. Vorzugsweise bildet das Strukturelement zumindest an einer Innenseite der Düse zumindest eine makroskopische Struktur aus und/oder eine Oberfläche mit einer mittleren Rauheit Rₐ von zumindest 10 µm, vorzugsweise von zumindest 100 µm und besonders bevorzugt von zumindest 1000 µm. Dabei soll unter einer "makroskopischen Struktur" in diesem Zusammenhang insbesondere eine Struktur verstanden werden, welche an zumindest einem Punkt, senkrecht zu einer Haupterstreckungsrichtung der Düse betrachtet, gegenüber einer insbesondere zylindrischen Grundform einer Innenseite der Düse zumindest 0,1 mm, vorzugsweise zumindest 0,5 mm und besonders bevorzugt zumindest 1 mm in einen Innenraum der Düse ragt. Dadurch kann insbesondere eine turbulente Strömung des Druckmaterials in der Düse erreicht werden. Hierdurch kann wiederum ein Verstopfen der Düse vermieden werden. Insbesondere bei der Verwendung von Zusätzen bei einem Druckmaterial, wie beispielsweise von Fasern, insbesondere Kohlefasern, kann vorteilhaft ein Verstopfen der Düse durch die Fasern vermieden werden. Das Problem bei Fasern ist, dass diese in der Regel eine Auslassöffnung der Düse blockieren, da die Düsen nicht für den Transport von festen Fasern vorgesehen sind. Die Blockade erfolgt dabei aufgrund des Strömungsverhaltens der Schmelze mit den zufällig ausgerichteten festen Fasern. Durch eine turbulente Strömung innerhalb der Düse wird eine derartige Strömung erzeugt, welche die Fasern entlang des Strömungspfades ausrichten. Auf diese Weise gelangen die Fasern durch die Auslassöffnung der Düse, ohne diese zu verstopfen.

Ferner wird vorgeschlagen, dass die Druckkopfeinheit zumindest eine Düsenwechseleinheit mit zumindest zwei Düsen aufweist, die zu einem demontagelosen Wechsel zwischen den zumindest zwei Düsen vorgesehen ist. Vorzugsweise ist die Düsenwechseleinheit als ein Düsen-Revolver ausgebildet. Besonders bevorzugt weisen die Düsen dabei verschiedene Durchmesser und/oder Formen von Auslassöffnungen auf. Unter einer "Düsenwechseleinheit" soll in diesem Zusammenhang insbesondere eine Einheit der Druckkopfeinheit verstanden werden, welche mehrere Düsen aufweist, zwischen welchen demontagelose gewechselt werden kann. Vorzugsweise kann zwischen verschiedenen Düsen zu einer Benutzung gewechselt werden. Die Düsen sind dabei insbesondere ständig an der Druckkopfeinheit angeordnet und werden lediglich durchgewechselt, je nachdem welche Düse aktuell benutzt werden soll. Eine Entscheidung welche Düse benutzt werden soll, kann dabei grundsätzlich von einem Bediener und/oder einer Steuer- und/oder Regeleinheit getroffen werden. Wird eine entsprechende Entscheidung von der Steuer- und/oder Regeleinheit getroffen, kann beispielsweise eine Düse abhängig von einem aktuellen Druckobjekt ausgewählt werden. Es sind verschiedene, einem Fachmann als sinnvoll erscheinende Mechanismen zu einer Realisierung einer Düsenwechseleinheit denkbar, insbesondere ist die Düsenwechseleinheit jedoch als ein Düsen-Revolver ausgebildet. Ein Düsen-Revolver ist dabei entsprechend einem Objektiv-Revolver bei Mikroskopen ausgebildet. Dadurch kann vorteilhaft ein Düsenwechsel erreicht werden, ohne eine aktuelle Düse demontieren und eine neue Düse montieren zu müssen. Vorzugsweise kann dadurch vorteilhaft ermöglicht werden, dass eine Düse selbsttätig abhängig von einem aktuellen Druckobjekt ausgewählt wird.

Des Weiteren wird vorgeschlagen, dass die Druckkopfeinheit zumindest einen Grundkörper und zumindest eine Düse aufweist, welche getrennt von dem Grundkörper demontierbar ausgebildet ist. Vorzugsweise ist die Düse unabhängig von dem Grundkörper der Druckkopfeinheit demontierbar. Unter einem "Grundkörper" der Druckkopfeinheit soll in diesem Zusammenhang insbesondere ein Bauteil der Druckkopfeinheit verstanden werden, der zumindest einen wesentlichen Teil der Bauelemente der Druckkopfeinheit ausnimmt und/oder an dem zumindest ein wesentlicher Teil der Bauelemente der Druckkopfeinheit befestigt ist. Vorzugsweise bildet der Grundkörper zumindest teilweise ein Gehäuse der Druckkopfeinheit. Dabei soll unter einem "zumindest wesentlichen Teil" insbesondere zumindest 50%, vorzugsweise zumindest 60% und besonders bevorzugt zumindest 80% der Bauelemente der Druckkopfeinheit verstanden werden. Darunter, dass "die Düse getrennt von dem Grundkörper demontierbar ausgebildet ist" soll in diesem Zusammenhang insbesondere verstanden werden, dass die Düse demontiert werden kann, ohne den gesamten Grundkörper oder vorzugsweise zumindest Einzelteile des Grundkörpers der Druckkopfeinheit entfernen zu müssen. Dadurch kann vorteilhaft ein einfacher Austausch der Düse erreicht werden.

Es wird ferner vorgeschlagen, dass die Druckkopfeinheit zumindest einen Grundkörper und zumindest ein Hot-End aufweist, welches getrennt, insbesondere werkzeuglos, von dem Grundkörper demontierbar ausgebildet ist. Unter einem "Hot-End" soll in diesem Zusammenhang insbesondere ein Bauteil der Druckkopfeinheit verstanden werden, welches direkt zu einer Aufschmelzung des Druckmaterials erhitzt wird und/oder zu einer direkten Aufschmelzung des Druckmaterials vorgesehen ist. Vorzugsweise soll darunter insbesondere eine erhitzbare Düse der Druckkopfeinheit verstanden werden. Ferner soll in diesem Zusammenhang unter "werkzeuglos" insbesondere ohne zusätzliche Hilfsmittel, insbesondere ohne zusätzliches Werkzeug, wie beispielsweise Schraubendreher oder Dergleichen, verstanden werden. Dadurch kann insbesondere ein schneller Austausch eines Hot-Ends der Druckkopfeinheit erreicht werden. Insbesondere bei einem hohen Verschleiß und/oder einer schnellen Verschmutzung des Hot-Ends kann die Wartungszeit vorteilhaft gering gehalten werden.

Es wird weiter vorgeschlagen, dass die 3D-Druckvorrichtung eine Trocknungseinheit aufweist, welche dazu vorgesehen ist, ein Druckmaterial, vor einer Zuführung der Druckkopfeinheit zu trocknen. Vorzugsweise ist die Trocknungseinheit entlang des Druckmaterials betrachtet vor der Druckkopfeinheit angeordnet. Die Trocknungseinheit ist dabei vollständig in die 3D-Druckvorrichtung integriert. Unter einer "Trocknungseinheit" soll in diesem Zusammenhang insbesondere eine Einheit verstanden werden, die zu einer Trocknung des Druckmaterials vorgesehen ist. Vorzugsweise ist die Trocknungseinheit dazu vorgesehen, dem Druckmaterial zumindest einen wesentlichen Teil eines darin befindlichen Wassers zu entziehen.

Eine Trocknung des Druckmaterials durch die Trocknungseinheit erfolgt vorzugsweise durch Hitze. Grundsätzlich wäre jedoch auch eine andere, einem Fachmann als sinnvoll erscheinende Methode zur Trocknung des Druckmaterials denkbar. Dadurch kann vorteilhaft eine gleichbleibende Trockenheit des Druckmaterials gewährleistet werden. Hierdurch kann wiederum ein Druckprozess vorteilhaft genau gesteuert und kontrolliert werden. Ferner kann durch die Trocknung eine Druckbarkeit des Druckmaterials verbessert werden.

Zudem wird vorgeschlagen, dass die 3D-Druckvorrichtung ein Magazin zur Aufnahme verschiedener Druckmaterialien aufweist. Vorzugsweise sind in dem Magazin unterschiedliche Druckmaterialien aufgenommen, wobei über das Magazin zwischen den verschiedenen Druckmaterialien gewechselt werden kann. Bevorzugt weist das Magazin mehrere Halterungen für Filamentspulen und/oder mehrere Behälter für unterschiedliche Druckmaterialien auf. Besonders bevorzugt nutzt die 3D-Druckvorrichtung, insbesondere durch die Steuer- und/oder Regeleinheit gesteuert, abhängig von einer zu erzielenden Farbe und/oder Festigkeit des zu druckenden Druckobjekts verschiedene Druckmaterialien. Über das Magazin kann insbesondere selbsttätig zwischen den Druckmaterialien gewechselt werden. Grundsätzlich ist dabei insbesondere vorgesehen, dass pro Druckobjekt lediglich ein Druckmaterial verwendet wird. Grundsätzlich wäre jedoch auch denkbar, dass Druckmaterialien während des Drucks eines Druckobjekts gewechselt und/oder gemischt werden. Die Druckmaterialien unterscheiden sich insbesondere in ihrer Farbe. Dadurch können Druckobjekte insbesondere selbsttätig aus verschiedenen Druckmaterialien hergestellt werden. Hierdurch können mit der 3D-Druckvorrichtung insbesondere verschiedene Farben von Druckobjekten realisiert werden.

Ferner setzt die Erfindung den Einsatz eines speziellen Druckmaterials für die 3D-Druckvorrichtung voraus. Es wird vorgeschlagen, dass das 3D-Druckmaterial zumindest einen Bestandteil aufweist, welcher aus PAEK besteht, und zumindest einen weiteren Bestandteil, welcher aus einem von PAEK differierenden Material besteht. Vorzugsweise besteht zumindest ein Bestandteil aus PEKK und/oder PEEK und zumindest ein Bestandteil aus einem von PEKK und/oder PEEK differierenden Material, vorzugsweise aus einem von PEAK differierenden Material. Dadurch kann das Druckmaterial vorteilhaft an individuelle Anforderungen angepasst werden.

Des Weiteren geht die Erfindung aus von einem Verfahren zum Betrieb der 3D-Druckvorrichtung mit einem zumindest teilweise von einem Hochleistungskunststoff gebildeten Druckmaterial. Es wird vorgeschlagen, dass ein Druckvorgang von einer Steuer- und/oder Regeleinheit der 3D-Druckvorrichtung gesteuert und/oder geregelt wird. Dadurch kann insbesondere eine vorteilhafte Steuerung und/oder Regelung zumindest eines Druckparameters erreicht werden. Vorzugsweise kann dadurch insbesondere eine Kontrolle des Druckprozesses erreicht werden. Insbesondere kann dadurch ein Druckprozess gezielt gesteuert werden.

Es wird ferner vorgeschlagen, dass abhängig von zumindest einer Kenngröße unterschiedliche Heizelemente der Flächenheizungseinheit angesteuert werden. Vorzugsweise werden die Heizelemente der Flächenheizungseinheit abhängig von zumindest einer Kenngröße des Druckobjekts und/oder zumindest einer Kenngröße des Druckvorgangs angesteuert. Besonders bevorzugt werden die Heizelemente der Flächenheizungseinheit abhängig von einer Form und/oder Beschaffenheit des Druckobjekts, einem Druckfortschritt und/oder Temperaturkenngrößen eines bereits gedruckten Teils des Druckobjekts angesteuert. Dadurch kann die Flächenheizungseinheit vorteilhaft variabel genutzt werden. Insbesondere kann dadurch eine sehr präzise Erhitzung des Druckobjekts erreicht werden. Ferner kann dadurch zudem eine vorteilhaft effiziente Erhitzung bereitgestellt werden. Insbesondere bei einer Bewegung der Flächenheizungseinheit relativ zu der Druckgrundplatte kann trotz allem eine gezielte Erhitzung des Druckobjekts erreicht werden. Es kann eine unerwünschte Erhitzung einer Umgebung vermieden werden. Vorzugsweise kann dadurch eine Heizfläche der Flächenheizungseinheit in Echtzeit an eine Form des Druckobjekts angepasst werden.

Es wird weiter vorgeschlagen, dass durch Ansteuern unterschiedlicher Heizelemente der Flächenheizungseinheit gezielt Teilbereiche des Druckobjekts erhitzt werden. Dabei werden insbesondere gezielt Teilbereiche eines bereits gedruckten Teils des Druckobjekts erhitzt. Eine gezielte Erhitzung kann dabei zu einer Vermeidung von Warping genutzt werden. Dadurch kann eine sehr präzise Erhitzung des Druckobjekts erreicht werden. Ferner kann dadurch zudem eine vorteilhaft effiziente Erhitzung bereitgestellt werden. Es kann eine unerwünschte Erhitzung einer Umgebung vermieden werden. Zudem kann auch vermieden werden, dass Teilbereiche des Druckobjekts erhitzt werden, welche insbesondere zu einem definierten Zeitpunkt des Druckprozesses nicht erhitzt werden sollen.

Vorzugsweise kann dadurch eine Heizfläche der Flächenheizungseinheit in Echtzeit an eine Form des Druckobjekts angepasst werden. Vorzugsweise kann dadurch insbesondere eine Kontrolle des Druckprozesses erreicht werden. Insbesondere kann dadurch ein Druckprozess gezielt gesteuert werden.

Zudem wird vorgeschlagen, dass das Druckobjekt vor dem Aufdruck einer weiteren Schicht vorrauseilend partiell durch die Lokalheizeinheit erhitzt wird. Vorzugsweise wird über die Lokalheizeinheit die Adhäsion zwischen den einzelnen Druckschichten durch eine partielle Erhitzung einer obersten Druckschicht des Druckobjekts vor dem Aufdruck einer weiteren Schicht durch die Druckkopfeinheit verbessert. Dabei wäre zudem denkbar, dass gezielt auf die Erhitzung durch die Lokaleinheit partiell verzichtet wird, um gezielt eine Adhäsion zu vermeiden. Dadurch könnte insbesondere erreicht werden, dass Schichten direkt aufeinander gedruckt werden können, ohne dass die Schichten miteinander verschmelzt werden. Dadurch kann eine sehr präzise Erhitzung des Druckobjekts erreicht werden. Ferner kann dadurch zudem eine vorteilhaft effiziente Heizeinheit bereitgestellt werden. Insbesondere kann das Druckobjekt dadurch vorteilhaft partiell erhitzt werden. Zudem kann dadurch vorteilhaft zuverlässig eine Verbindung der Schichten erreicht werden. Insbesondere aufgrund der hohen Schmelztemperaturen von Hochleistungskunststoffen muss zur Gewährleistung eines Zusammenschmelzens der Schichten eine sehr hohe Temperatur der obersten Schicht bereitgestellt werden.

Ferner wird vorgeschlagen, dass abhängig von einem Druck des Druckmaterials in der Druckkopfeinheit eine Druckgeschwindigkeit eingestellt wird. Vorzugsweise wird eine Druckgeschwindigkeit abhängig von einem Druck des Druckmaterials in der Druckkopfeinheit gesteuert und/oder geregelt. Besonders bevorzugt wird eine Druckgeschwindigkeit dabei insbesondere in Echtzeit geregelt. Dadurch kann vorteilhaft eine Druckgeschwindigkeit an einen Druckprozess angepasst werden. Insbesondere kann dadurch eine variable Einstellung einer Druckgeschwindigkeit erreicht werden. Vorzugsweise kann dadurch insbesondere eine Kontrolle des Druckprozesses erreicht werden. Insbesondere kann dadurch ein Druckprozess gezielt gesteuert werden.

Des Weiteren wird vorgeschlagen, dass ein Schrumpfprozess des Druckobjekts bei einer Abkühlung nach einem Druckvorgang vor und/oder während dem Druckvorgang berechnet und/oder berücksichtigt wird. Vorzugsweise wird ein Schrumpfverhalten des Druckmaterials zur Erreichung einer maximalen Druckgenauigkeit vor und/oder während dem Druckvorgang berechnet und/oder berücksichtigt.

Das Schrumpfverhalten wird dabei insbesondere derart berechnet und/oder berücksichtigt, dass ein Druckobjekt nach einem durch eine Abkühlung verursachten Schrumpfen auf die gewünschten Maße schrumpft, daher gezielt während eines Druckverfahrens mehr Material aufgebracht wird, um ein Schrumpfen auszugleichen. Dabei soll unter "Schrumpfen" in diesem Zusammenhang insbesondere eine beabsichtigte oder unbeabsichtigte Dimensionsänderung von Kunststoffen bei einer Temperaturänderung verstanden werden. Dadurch kann insbesondere eine vorteilhaft hohe Druckgenauigkeit erreicht werden. Insbesondere kann dadurch eine vorteilhaft hohe Genauigkeit eines endgültigen Druckobjekts erreicht werden. Vorzugsweise kann dadurch insbesondere eine Kontrolle des Druckprozesses erreicht werden. Insbesondere kann dadurch ein Druckprozess gezielt gesteuert werden.

Es wird ferner vorgeschlagen, dass ein Druckobjekt während des Druckvorgangs zumindest teilweise vermessen wird. Vorzugsweise wird das Druckobjekt während des Druckvorgangs mittels einer Kamera und/oder eines Kalibrierungssensors vermessen. Vorzugsweise wird das Druckobjekt während des Druckvorgangs zumindest teilweise vermessen, um mögliche Abweichungen zwischen dem Druckobjekt und einer auf der Steuer- und/oder Regeleinheit hinterlegten, digitalen Vorlage festzustellen. Dadurch kann vorteilhaft eine Genauigkeit des Druckvorgangs überwacht werden. Vorzugsweise können dadurch mögliche Abweichungen zwischen dem Druckobjekt und einer auf der Steuer- und/oder Regeleinheit hinterlegten, digitalen Vorlage festgestellt werden. Vorzugsweise kann dadurch insbesondere eine Kontrolle des Druckprozesses erreicht werden. Insbesondere kann dadurch ein Druckprozess gezielt gesteuert werden. Grundsätzlich wäre jedoch auch denkbar, dass eine Vermessung des Druckobjekts lediglich nach einem Druckvorgang durchgeführt wird. Dadurch kann vorteilhaft ein Rechenaufwand reduziert werden.

Es wird weiter vorgeschlagen, dass die Druckparameter eines Druckvorgangs abhängig von einem Vermessungsergebnis zumindest teilweise angepasst werden. Vorzugsweise werden die Druckparameter eines Druckvorgangs abhängig von einer Abweichung zwischen dem Druckobjekt und einer auf der Steuer- und/oder Regeleinheit hinterlegten, digitalen Vorlage zumindest teilweise angepasst.

Dadurch kann insbesondere erreicht werden, dass mögliche Druckungenauigkeiten, insbesondere während des Druckvorgangs, verbessert werden können. Zudem wäre auch denkbar, dass die 3D-Druckvorrichtung abhängig von einem Vermessungsergebnis selbsttätig Nachbesserungen an dem Druckobjekt durchführt. Sollte dabei insbesondere beispielsweise eine erhebliche Abweichung zwischen dem Druckobjekt und einer auf der Steuer- und/oder Regeleinheit hinterlegten, digitalen Vorlage auftreten, könnten gezielt Nachbesserungen durchgeführt werden, um die Abweichung zu verbessern. Dadurch kann eine vorteilhaft genaue 3D-Druckvorrichtung bereitgestellt werden. Es kann ein vorteilhaft genauer Druckprozess ermöglicht werden.

Zudem wird vorgeschlagen, dass eine Farbe eines zu druckenden Druckobjekts durch Anpassung wenigstens eines Druckparameters beeinflusst wird. Vorzugsweise wird eine Farbe eines zu druckenden Druckobjekts insbesondere durch Anpassung einer Drucktemperatur und/oder eines Drucks des Druckmaterials in der Druckkopfeinheit beeinflusst. Besonders bevorzugt passt die Steuer- und/oder Regeleinheit anhängig von einer gewünschten Farbe des Druckobjekts eine Drucktemperatur und/oder ein Druck des Druckmaterials an. Es sind jedoch auch andere, einem Fachmann als sinnvoll erscheinende Druckparameter zu einer Anpassung einer Farbe eines zu druckenden Druckobjekts denkbar. Dadurch kann vorteilhaft bei gleichem Druckmaterial eine Anpassung einer Farbe des Druckobjekts erfolgen. Vorzugsweise können dadurch zumindest Nuancen einer Farbe beeinflusst werden. Zudem können dadurch auch Farbverläufe ermöglicht werden.

Ferner wird vorgeschlagen, dass ein Druckmaterial vor einer Zuführung der Druckkopfeinheit getrocknet wird. Eine Trocknung des Druckmaterials kann dabei sowohl direkt in der 3D-Druckvorrichtung als auch in einer separaten Vorrichtung erfolgen. Eine Trocknung des Druckmaterials durch die Trocknungseinheit erfolgt vorzugsweise durch Hitze. Grundsätzlich wäre jedoch auch eine andere, einem Fachmann als sinnvoll erscheinende Methode zur Trocknung des Druckmaterials denkbar. Dadurch kann vorteilhaft eine gleichbleibende Trockenheit des Druckmaterials gewährleistet werden. Hierdurch kann wiederum ein Druckprozess vorteilhaft genau gesteuert und kontrolliert werden. Ferner kann durch die Trocknung eine Druckbarkeit des Druckmaterials verbessert werden. Vorzugsweise kann dadurch insbesondere eine hohe Kontrolle des Druckprozesses erreicht werden.

Des Weiteren wird vorgeschlagen, dass vor einem Druck eines Druckobjekts eine Stabilisierungsschicht mit einer Grundfläche auf die Druckgrundplatte aufgedruckt wird, welche größer als eine Grundfläche einer ersten Schicht des Druckobjekts ist. Vorzugsweise weist die Stabilisierungsschicht zumindest teilweise abgerundete Ecken auf. Besonders bevorzugt weist die Stabilisierungsschicht eine zumindest teilweise elliptische Grundfläche auf. Unter einer "Stabilisierungsschicht" soll in diesem Zusammenhang insbesondere eine gedruckte Schicht verstanden werden, auf welche während eines Druckvorgangs ein Druckobjekt aufgedruckt wird. Die Schicht ist dabei vorzugsweise zumindest während eines Druckvorgangs mit dem Druckobjekt verbunden. Besonders bevorzugt soll darunter insbesondere eine Schicht verstanden werden, welche dazu vorgesehen ist, Spannungen in dem Druckobjekt aufzunehmen und nach außen hin abzuleiten. Die Stabilisierungsschicht dient insbesondere zu einer Vermeidung von Warping an dem Druckobjekt selbst, indem Spannungen, welche Warping verursachen, in die Stabilisierungsschicht abgeleitet werden. Die Stabilisierungsschicht wird vorzugsweise nach einem Druckprozess von dem Druckobjekt entfernt. Dadurch kann vorteilhaft zuverlässig Warping an dem Druckobjekt vermieden werden. Zudem kann dadurch insbesondere eine hohe Kontrolle des Druckprozesses erreicht werden.

Es wird ferner vorgeschlagen, dass die Druckgrundplatte nach einem Druckverfahren zur Ablösung des Druckobjekts aktiv gekühlt wird. Vorzugsweise wird die Druckgrundplatte nach einem Druckverfahren schockartig abgekühlt. Eine Abkühlung erfolgt dabei insbesondere mittels der Kühlvorrichtung. Dadurch kann insbesondere ein zuverlässiges Ablösen des Druckobjekts erreicht werden, Es kann insbesondere vermieden werden, dass das Druckobjekt manuell von der Druckgrundplatte entfernt werden muss. Zudem kann dadurch ein selbsttätiges Ablösen des Druckobjekts, auch bei einer hohen Adhäsion des Druckobjekts auf der Druckgrundplatte während des Druckverfahrens selbst, erreicht werden.

Die erfindungsgemäße 3D-Druckvorrichtung sowie der 3D-Drucker, das Druckmaterial und das Verfahren sollen hierbei nicht auf die oben beschriebene Anwendung und Ausführungsform beschränkt sein. Insbesondere können die erfindungsgemäße 3D-Druckvorrichtung sowie der 3D-Drucker, das Druckmaterial und das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen 3D-Drucker mit einer erfindungsgemäßen 3D-Druckvorrichtung in einer schematischen Darstellung von vorne,
- Fig. 2: den 3D-Drucker mit der erfindungsgemäßen 3D-Druckvorrichtung in einer schematischen Darstellung von hinten,
- Fig. 3: eine Druckkopfeinheit und eine aktive Kühleinheit der erfindungsgemäßen 3D-Druckvorrichtung in einer schematischen Darstellung,

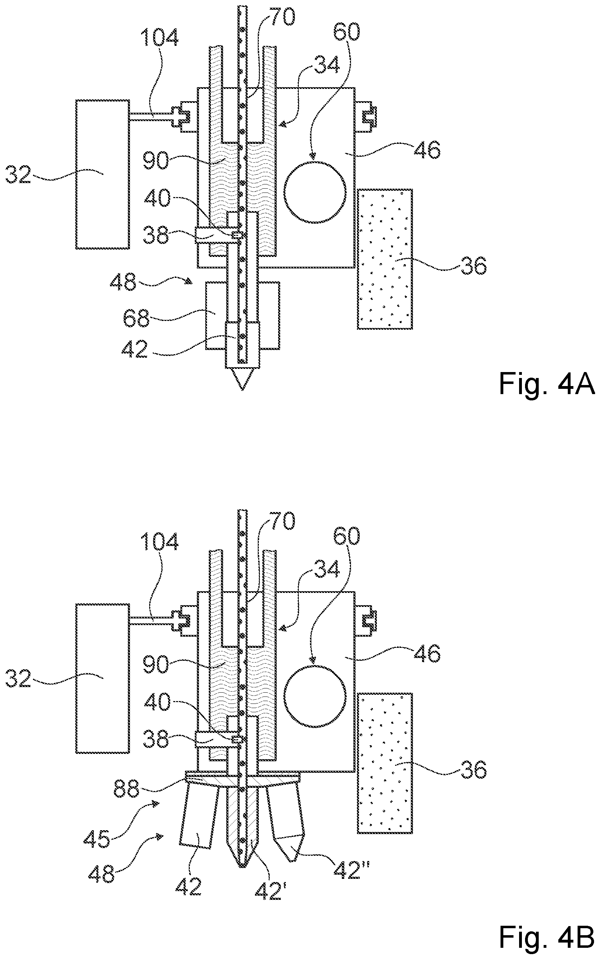

- Fig. 4A: die Druckkopfeinheit, die aktive Kühleinheit und eine Sensoreinheit der erfindungsgemäßen 3D-Druckvorrichtung in einer schematischen Schnittdarstellung,
- Fig. 4B: die Druckkopfeinheit mit einer Düsenwechseleinheit, die aktive Kühleinheit und eine Sensoreinheit der erfindungsgemäßen 3D-Druckvorrichtung in einer schematischen Schnittdarstellung,
- Fig. 5A: einen Teilausschnitt einer Düse der Druckkopfeinheit der erfindungsgemäßen 3D-Druckvorrichtung in einer schematischen Schnittdarstellung,
- Fig. 5B: einen Teilausschnitt einer alternativen Düse der Druckkopfeinheit der erfindungsgemäßen 3D-Druckvorrichtung in einer schematischen Schnittdarstellung,
- Fig. 5C: eine weitere alternative Düse der Druckkopfeinheit der erfindungsgemäßen 3D-Druckvorrichtung in einer schematischen Schnittdarstellung,
- Fig. 6A: eine Grundeinheit mit einer Druckgrundplatte, die Druckkopfeinheit und eine Flächenheizungseinheit der erfindungsgemäßen 3D-Druckvorrichtung in einer schematischen Darstellung,
- Fig. 6B: die Grundeinheit mit der Druckgrundplatte, die Druckkopfeinheit und eine alternative Flächenheizungseinheit der erfindungsgemäßen 3D-Druckvorrichtung in einer schematischen Darstellung,
- Fig. 7: die Druckkopfeinheit und die Flächenheizungseinheit der erfindungsgemäßen 3D-Druckvorrichtung in einer schematischen Darstellung in einem Betriebszustand,
- Fig. 8A: ein Druckmaterial und eine Druckmaterialaufnahmeeinheit der 3D-Druckvorrichtung in einer schematischen Darstellung,
- Fig. 8B: das Druckmaterial und eine alternative Druckmaterialaufnahmeeinheit der 3D-Druckvorrichtung in einer schematischen Darstellung,
- Fig. 9: ein Diagramm zur Darstellung eines Zusammenhangs von Druckparametern der erfindungsgemäßen 3D-Druckvorrichtung in einer schematischen Darstellung und
- Fig. 10: einen Teilausschnitt der Grundeinheit mit der Druckgrundplatte der erfindungsgemäßen 3D-Druckvorrichtung und ein Druckobjekt mit einer Stabilisierungsschicht in einer schematischen Darstellung.

### Beschreibung eines Ausführungsbeispiels

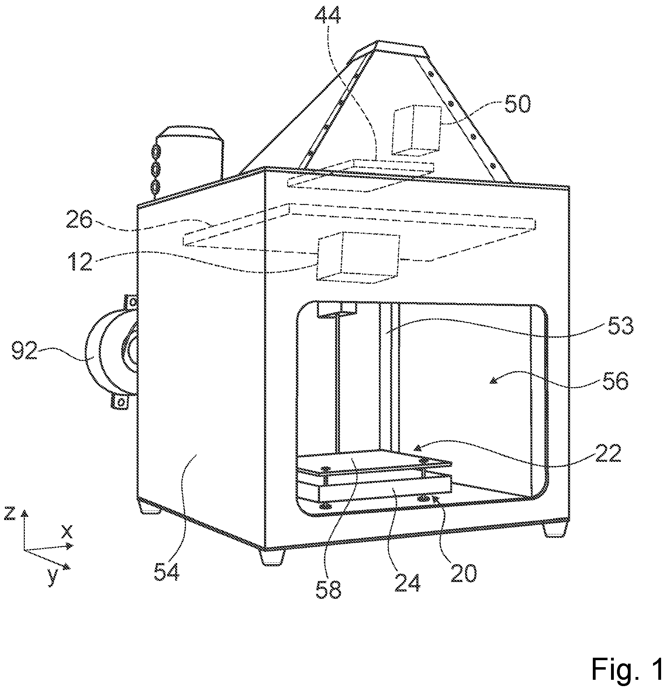

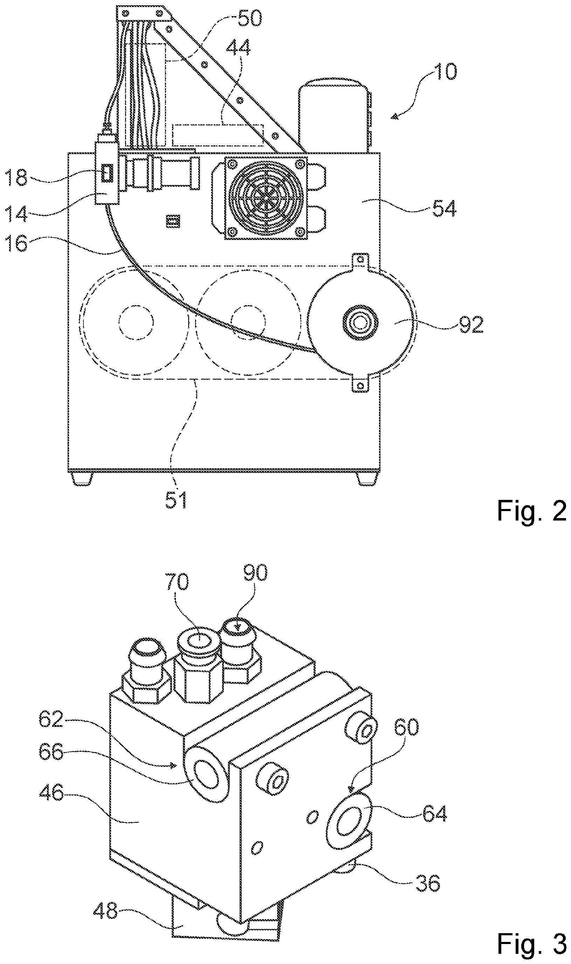

Die Figuren 1 und 2 zeigen einen 3D-Drucker mit einer 3D-Druckvorrichtung 10. Die 3D-Druckvorrichtung 10 bildet den 3D-Drucker. Grundsätzlich wäre jedoch auch denkbar, dass die 3D-Druckvorrichtung 10 lediglich als ein Kit ausgebildet ist, welches zur Aufrüstung eines bereits bekannten 3D-Druckers vorgesehen ist. Daher wäre grundsätzlich auch denkbar, dass Teile der 3D-Druckvorrichtung 10 dem 3D-Drucker zugeordnet sein könnten.

Die 3D-Druckvorrichtung 10 ist als eine FFF-Druckvorrichtung, d.h. als eine Fused-Filament-Fabrication-Druckvorrichtung ausgebildet. Insbesondere ist die 3D-Druckvorrichtung 10 als eine FDM-Druckvorrichtung, d.h. als eine Fused-Deposition-Modeling-Druckvorrichtung ausgebildet. Die 3D-Druckvorrichtung 10 ist zu einem Drucken von Hochleistungskunststoffen vorgesehen. Die 3D-Druckvorrichtung 10 ist zu einem Drucken von PAEK Kunststoffen vorgesehen. Mit der 3D-Druckvorrichtung 10 wird PEEK und/oder PEKK gedruckt.

Ein Druckmaterial 16 ist dabei als Filament ausgebildet. Ferner weist das Druckmaterial 16 einen Bestandteil auf, welcher aus PEEK und/oder PEKK besteht. Des Weiteren weist das Druckmaterial 16 einen weiteren Bestandteil auf, welcher aus einem von PEEK und PEKK differierenden Material besteht. Grundsätzlich wäre jedoch auch denkbar, dass das Druckmaterial 16 vollständig aus PEEK und/oder PEKK besteht.

Die 3D-Druckvorrichtung 10 weist einen Rahmen 53 auf. Der Rahmen 53 ist als ein Aluminiumrahmen ausgebildet. Der Rahmen 53 weist beispielhaft die Maße 350mm in der Länge, 560 mm in der Höhe und 350 mm in der Breite auf. Grundsätzlich wären jedoch auch andere einem Fachmann als sinnvoll erscheinende Maße denkbar. Ferner weist die 3D-Druckvorrichtung 10 ein Gehäuse 54 auf. Das Gehäuse 54 weist mehrere Platten auf, die in Form einer Verkleidung an dem Rahmen 53 befestigt sind. Die Platten bestehen aus eloxiertem Aluminium. Grundsätzlich wäre jedoch auch ein anderes, einem Fachmann als sinnvoll erscheinendes Material denkbar. Das Gehäuse 54 weist an einer Vorderseite eine Öffnung 56 auf, über welche ein Bauraum der 3D-Druckvorrichtung 10 zugänglich ist. Die Öffnung 56 ist über eine nicht weiter sichtbare Türe verschließbar. Die Türe besteht aus einem Verbundsicherheitsglas. Der Bauraum bildet eine untere Ebene der 3D-Druckvorrichtung 10 (Figur 1).

Auf einer Unterseite des Bauraums befindet sich eine Grundeinheit 20. Die 3D-Druckvorrichtung 10 weist die Grundeinheit 20 auf. Die Grundeinheit 20 weist eine Druckgrundplatte 22 auf, auf welche während eines Druckvorgangs aufgedruckt wird. Die Druckgrundplatte 22 ist beheizbar. Die Druckgrundplatte 22 ist regelbar beheizbar. Die Druckgrundplatte 22 ist nicht weiter sichtbar in Segmenten regelbar beheizbar ausgebildet. Eine Temperatur der Druckgrundplatte 22 ist über eine Steuer- und Regeleinheit 44 der 3D-Druckvorrichtung 10 regelbar. Die Segmente der Druckgrundplatte 22 sind separat ansteuerbar ausgebildet. Die Segmente der Druckgrundplatte 22 können über die Steuer- und Regeleinheit 44 der 3D-Druckvorrichtung 10 separat unterschiedlich stark erhitzt werden. Die Druckgrundplatte 22 wird während eines Betriebs in der Regel gleichmäßig auf 100°C erhitzt. Grundsätzlich wäre jedoch auch eine alternative Temperaturansteuerung der Druckgrundplatte 22 denkbar.

Ferner weist die Druckgrundplatte 22 auf einer Oberseite eine Glasplatte 58 auf. Auf die Glasplatte 58 wird während eines Druckvorgangs aufgedruckt. Die Glasplatte 58 wird benötigt, um das Druckmaterial 16, insbesondere das PEEK, während des Druckvorgangs haften zu lassen. Die Druckgrundplatte 22 ist in Z-Richtung bewegbar ausgebildet. Die Druckgrundplatte 22 ist über eine nicht weiter sichtbare Antriebseinheit in Z-Richtung beweglich ausgebildet. Die nicht weiter sichtbare Antriebseinheit der Druckgrundplatte 22 wird von der Steuer- und Regeleinheit 44 der 3D-Druckvorrichtung 10 angesteuert. Ferner weist die Grundeinheit 20 eine Kühlvorrichtung 24 auf. Die Kühlvorrichtung 24 ist zu einer aktiven Abkühlung der Druckgrundplatte 22 vorgesehen. Die Kühlvorrichtung 24 ist zu einer schockartigen Abkühlung der Druckgrundplatte 22 vorgesehen. Über die Kühlvorrichtung 24 kann ein Abkühlverlauf der Druckgrundplatte 22 gesteuert werden. Die Kühlvorrichtung 24 ist unterhalb der Druckgrundplatte 22 angeordnet. Die Kühlvorrichtung 24 ist als eine Wasserkühlvorrichtung ausgebildet.

Zu einer Kühlung der Druckgrundplatte 22 wird in der Kühlvorrichtung 24 Wasser zirkuliert, welches an anderer Stelle durch nicht weiter sichtbare Kühlrippen zu einer Wärmeabgabe geleitet wird. Grundsätzlich wäre jedoch auch eine andere, einem Fachmann als sinnvoll erscheinende Ausgestaltung der Kühlvorrichtung 24 denkbar.

Das Druckvolumen der 3D-Druckvorrichtung 10 beträgt hier beispielhaft 155mm auf 155 mm auf 155 mm. Grundsätzlich wäre jedoch auch ein anderes, einem Fachmann als sinnvoll erscheinendes Druckvolumen denkbar.

Ferner weist die 3D-Druckvorrichtung 10 eine Druckkopfeinheit 12 auf. Die Druckkopfeinheit 12 ist in einem Betriebszustand dazu vorgesehen, ein von einem Hochleistungskunststoff gebildetes Druckmaterial 16 aufzuschmelzen. Die Druckkopfeinheit 12 ist in einem Betrieb dazu vorgesehen, ein von PEEK und/oder PEKK gebildetes Druckmaterial 16 aufzuschmelzen. Die Druckkopfeinheit 12 weist einen Grundkörper 46 auf. Der Grundkörper 46 der Druckkopfeinheit 12 besteht aus einem Aluminiumblock. Ferner sind an dem Grundkörper 46 Lager 60, 62 zur Befestigung einer X-Positionierstange 64 und einer Y-Positionierstange 66 angeordnet. Die Druckkopfeinheit 12 ist über die X-Positionierstange 64 und die Y-Positionierstange 66 nicht weiter sichtbar mit dem Rahmen 53 der 3D-Druckvorrichtung 10 verbunden. Eine X-Y-Positionierung der Druckkopfeinheit 12 wird durch nicht weiter sichtbare Schrittmotoren realisiert. Die nicht weiter sichtbaren Schrittmotoren bewegen die X-Positionierstange 64 und die Y-Positionierstange 66 der Drucckopfeinheit 12. Die Schrittmotoren sind jeweils über nicht weiter sichtbare Zahnriemen mit der X-Positionierstange 64 und der Y-Positionierstange 66 verbunden. Die Schrittmotoren sind von der Steuer- und Regeleinheit 44 der 3D-Druckvorrichtung 10 ansteuerbar. Über die Schrittmotoren kann die Druckkopfeinheit 12 von der Steuer- und Regeleinheit 44 bewegt werden.

Des Weiteren weist die Druckkopfeinheit 12 ein Hot-End 48 auf. Das Hot-End 48 ist an dem Grundkörper 46 der Druckkopfeinheit 12 angeordnet. Das Hot-End 48 ist getrennt von dem Grundkörper 46 demontierbar ausgebildet. Das Hot-End 48 ist werkzeuglos demontierbar ausgebildet. Das Hot-End 48 weist eine Düse 42 und eine Düsenheizung 68 auf. Die Düse 42 der Druckkopfeinheit 12 ist mit dem Grundkörper 46 der Druckkopfeinheit 12 verbunden. Die Düse 42 ist getrennt von dem Grundkörper 46 demontierbar ausgebildet. Die Düse 42 kann nach unten hin aus dem Grundkörper 46 gezogen werden.

Die Düse 42 ist dabei lediglich über eine nicht weiter sichtbare Sicherung gegen ein ungewolltes Herausfallen gesichert. Die Düsenheizung 68 ist in einem Betrieb zu einer Erhitzung der Düse 42 vorgesehen. Die Düsenheizung 68 weist einen 20 mm langen Aluminiumblock auf, der durch zwei Widerstandsheizelemente auf ca. 340°C bis 400°C erwärmt wird. Die Temperatur wird mittels eines nicht weiter sichtbaren Thermoelements erfasst und überwacht. Der Aluminiumblock umgibt die Düse 42. Grundsätzlich wäre es jedoch auch denkbar, dass die Düse 42 erst nach der Düsenheizung 68 angeordnet ist und das Druckmaterial 16 direkt in der Düsenheizung 68 aufgeschmolzen wird. Grundsätzlich sind jedoch auch andere, einem Fachmann als sinnvoll erscheinende Ausgestaltungen der Düsenheizung 68 denkbar. Ein Druckmaterial 16 wird während eines Betriebs in der Druckkopfeinheit 12 durch einen Kanal 70 in dem Grundkörper 46 in die Düse 42 geleitet. In der Düse 42 wird das Druckmaterial 16 für ein Auspressen aus der Düse 42 über die Düsenheizung 68 aufgeschmolzen. Das Druckmaterial 16 wird dabei im Bereich der Düsenheizung 68 aufgeschmolzen und über eine Auslassöffnung 72 der Düse 42 extrudiert.

Die Düse 42 der Druckkopfeinheit 12 weist an einer Innenseite 74 eine Härte von zumindest 200 HV 10 auf. Die Düse 42 weist an einer Innenseite 74 eine Härte von mehr als 2000 HV 10 auf. Die Düse 42 der Druckkopfeinheit 12 weist auf einer Innenseite 74 eine Beschichtung mit einer Härte von zumindest 200 HV 10 auf. Die Düse 42 der Druckkopfeinheit 12 weist auf einer Innenseite 74 eine Beschichtung auf, die aus einer Keramik besteht. Die Beschichtung besteht aus Wolframcarbid. Grundsätzlich sind jedoch auch andere, einem Fachmann als sinnvoll erscheinende Materialien und/oder Beschichtungen für die Düse 42 der Druckkopfeinheit 12 denkbar. Ein Rest der Düse 42 besteht aus Messing.

Ferner sind verschiedene Formgebungen der Düse 42 der Druckkopfeinheit 12 denkbar. Nachfolgend sind drei mögliche Formgebungen beschrieben. Die Bezugszeichen der verschiedenen Düsen 42, 42', 42" sind dabei jeweils mittels Apostrophen unterschieden. Die Düsen 42, 42', 42" können alle jeweils an dem Grundkörper 46 der Druckkopfeinheit 12 montiert werden.

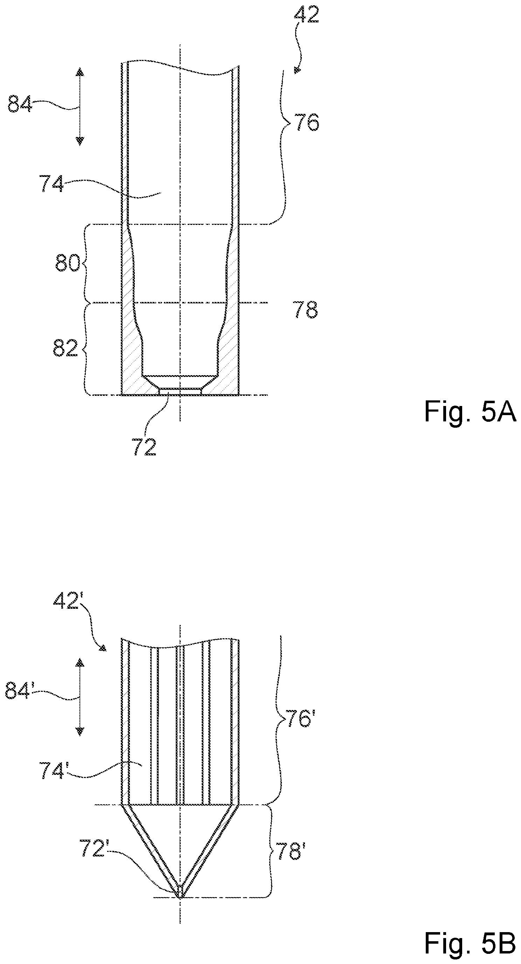

In einer ersten Ausgestaltung weist die Düse 42 einen kurzen Führungsbereich 76 und einen langen Mündungsbereich 78 auf. Der Mündungsbereich 78 ist dabei in zwei Teilbereiche 80, 82 gegliedert. In einem ersten, der Auslassöffnung 72 abgewandten Teilbereich 80 des Mündungsbereichs 78 verringert sich ein Innendruckmesser der Düse 42 von dem Führungsbereich 76 entlang einer Haupterstreckungsrichtung 84 der Düse 42 in Richtung der Auslassöffnung 72, wobei eine Abnahme des Innendurchmessers in Richtung des zweiten Teilbereichs 82 zumindest annähernd auf null abnimmt. In einem zweiten, der Auslassöffnung 72 zugewandten Teilbereich 82 des Mündungsbereichs 78 verringert sich ein Innendruckmesser der Düse 42 entlang einer Haupterstreckungsrichtung 84 der Düse 42 in Richtung der Auslassöffnung 72 nochmals. In einem Bereich vor der Auslassöffnung 72 weist die Innenseite 74 der Düse 42 eine kegelförmig zu der Auslassöffnung 72 hin zulaufende Innenkontur auf. Die Innenkontur der Auslassöffnung 72 der Düse 42 ist zylindrisch. Eine Größe der Auslassöffnung 72 ist groß. Hierdurch können hohe Druckgeschwindigkeiten realisiert werden. Zudem können durch die mehreren Teilbereiche 80, 82 des Mündungsbereichs 78 Materialablagerungen in der Düse 42 vermieden werden (Figur 5A).

In einer zweiten Ausgestaltung weist die Düse 42' einen langen Führungsbereich 76' und einen kurzen Mündungsbereich 78' auf. Der Führungsbereich 76' weist dabei einen konstanten Innendurchmesser auf. An einer Innenseite 74' der Düse 42' in dem Führungsbereich 76' sind feine Rillen eingebracht. Die Rillen erstrecken sich parallel zu einer Haupterstreckungsrichtung 84' der Düse 42'. Dadurch kann insbesondere eine vorteilhaft hohe Oberflächenqualität erreicht werden. Zudem kann bei der Verwendung von Druckmaterialien 16, welchen Fasern zugesetzt sind, eine Ausrichtung der Fasern an einer Oberfläche des Druckmaterials 16 erreicht werden.

Hierdurch kann wiederum eine hohe Oberflächenqualität auch bei der Verwendung von Fasern in dem Druckmaterial 16 erreicht werden. In dem Mündungsbereich 78' verringert sich ein Innendruckmesser der Düse 42' von dem Führungsbereich 76' entlang einer Haupterstreckungsrichtung 84' der Düse 42' in Richtung der Auslassöffnung 72'. In dem Mündungsbereich 78' weist die Innenseite 74' der Düse 42' eine kegelförmig zu der Auslassöffnung 72' hin zulaufende Innenkontur auf. Die Innenkontur der Auslassöffnung 72' der Düse 42' ist zylindrisch. Eine Größe der Auslassöffnung 72' ist klein. Die Auslassöffnung 72' weist einen Durchmesser von 0,4 mm auf. Grundsätzlich wäre jedoch auch ein anderer, einem Fachmann als sinnvoll erscheinender Durchmesser denkbar. Hierdurch kann eine hohe Druckgenauigkeit realisiert werden (Figur 5B).

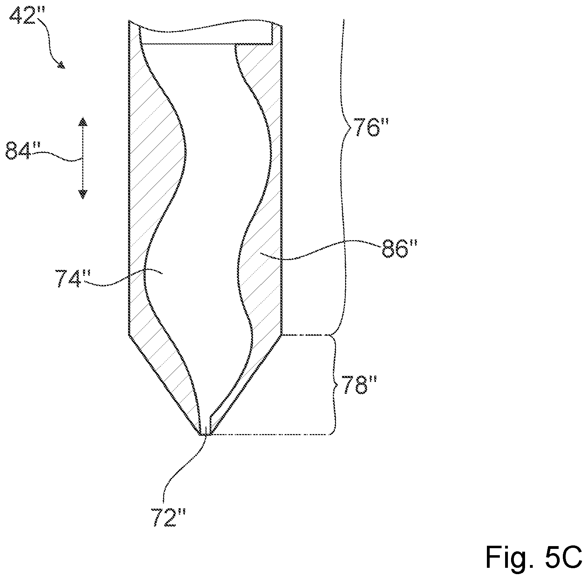

In einer dritten Ausgestaltung weist die Düse 42" einen langen Führungsbereich 76" und einen kurzen Mündungsbereich 78" auf. Ferner weist die Düse 42" ein Strukturelement 86" auf. Das Strukturelement 86" ist zu einer Erzeugung einer turbulenten Strömung in der Düse 42" vorgesehen. Das Strukturelement 86" ist an einer Innenseite 74" der Düse 42" angeordnet. Das Strukturelement 86" ist von einer Spiralstruktur gebildet, welche das Druckmaterial 16 spiralförmig durch die Düse 42" führt bzw. eine spiralförmige Bewegung des Druckmaterials 16 in der Düse 42" bewirkt. Grundsätzlich wäre jedoch auch eine andere, einem Fachmann als sinnvoll erscheinende Ausgestaltung des Strukturelements 86" denkbar. Durch das Strukturelement 86" kann insbesondere eine turbulente Strömung in der Düse 42" erreicht werden. Hierdurch kann insbesondere auch bei kleinen Auslassöffnung 72" ein Verstopfen der Auslassöffnung 72" vermieden werden. Insbesondere kann dadurch auch bei der Verwendung von Fasern in dem Druckmaterial 16 ein Verstopfen der Auslassöffnung 72" vermieden werden (Figur 5C).

Zudem oder alternativ wäre es auch denkbar, dass zumindest eine der Düsen 42, 42', 42" oder eine weitere Düse eine verstellbare Auslassöffnung 72, 72', 72" aufweist. Dabei wäre es insbesondere denkbar, dass bei der Düse 42, 42', 42" eine Form und/oder ein Durchmesser der Auslassöffnung 72, 72', 72" verändert werden kann. Dadurch könnte insbesondere eine Form und/oder ein Durchmesser der Auslassöffnung 72, 72', 72" an einen aktuellen Druckprozess angepasst werden. Insbesondere könnte die Auslassöffnung 72, 72', 72" der Düse 42, 42', 42" an aktuelle Anforderungen, wie insbesondere eine Dicke und/oder eine Form einer zu druckenden Schicht, angepasst werden.

Während eines Betriebs kann zwischen den verschiedenen Düsen 42, 42', 42" gewechselt werden. Ein Wechsel der Düsen 42, 42', 42" erfolgt dabei manuell. Zudem kann jedoch auch anstatt einer einzelnen Düse 42, 42', 42" eine Düsenwechseleinheit 45 an dem Grundkörper 46 der Druckkopfeinheit 12 montiert werden. Die Düsenwechseleinheit 45 kann dabei insbesondere anstatt einer Düse 42, 42', 42" montiert werden. Die Druckkopfeinheit 12 weist die Düsenwechseleinheit 45 auf. Die Düsenwechseleinheit 45 ist als ein Düsen-Revolver ausgebildet. Die Düsenwechseleinheit 45 weist wiederum drei Düsen 42, 42', 42" auf. Grundsätzlich ist jedoch auch eine andere, einem Fachmann als sinnvoll erscheinende Anzahl von Düsen 42, 42', 42" denkbar. Die Düsenwechseleinheit 45 weist hier beispielhaft die drei bereits beschriebenen Düsen 42, 42', 42" auf.

Grundsätzlich wäre jedoch auch denkbar, dass die Düsenwechseleinheit 45 weitere differierende Düsen aufweist. Die Düsenwechseleinheit 45 weist in der Regel insbesondere Düsen 42, 42', 42" mit verschiedenen Durchmessern und/oder Formen von Auslassöffnungen 72, 72', 72" auf. Ferner weist die Düsenwechseleinheit 45 eine gegenüber dem Grundkörper 46 der Druckkopfeinheit 12 angeordnete Drehscheibe 88 auf. Auf einer dem Grundkörper 46 abgewandten Seite der Drehscheibe 88 sind die Düsen 42, 42', 42" angeordnet. Durch Verdrehen der Drehscheibe 88 kann manuell ausgewählt werden, welche Düse 42, 42', 42" mit dem Kanal 70 in dem Grundkörper 46 verbunden werden soll.

Grundsätzlich wäre jedoch auch denkbar, dass die Düsenwechseleinheit 45 direkt von der Steuer- und Regeleinheit 44 der 3D-Druckvorrichtung 10 angesteuert werden kann. Hierdurch könnte erreicht werden, dass die Steuer- und Regeleinheit 44 abhängig von einem Druckprozess selbsttätig eine optimale Düse 42, 42', 42" auswählt. Grundsätzlich wäre jedoch auch denkbar, dass die Steuer- und Regeleinheit 44 über eine nicht weiter sichtbare Anzeigeeinheit einem Bediener anzeigt, welche Düse 42, 42', 42" für einen aktuellen Druckprozess benötigt wird.

Ferner weist die 3D-Druckvorrichtung 10 eine Sensoreinheit 38 auf, welche zu einer direkten Messung eines Drucks des Druckmaterials 16 in der Druckkopfeinheit 12 vorgesehen ist. Die Sensoreinheit 38 ist zu einer direkten Messung eines relativen Drucks des Druckmaterials 16 in der Druckkopfeinheit 12 relativ zu einem Umgebungsdruck vorgesehen. Die Sensoreinheit 38 ist als ein Drucksensor ausgebildet. Die Sensoreinheit 38 weist zumindest ein Sensorelement 40 auf, welches in einer Düse 42 der Druckkopfeinheit 12 angeordnet ist. Das Sensorelement 40, welches als eine Sensorspitze ausgebildet ist und zu einer Erfassung eines Drucks vorgesehen ist, ragt durch eine Öffnung in dem Grundkörper 46 sowie eine Öffnung in der Düse 42 der Druckkopfeinheit 12 in einen Innenraum der Düse 42. Bei der Verwendung einer Düsenwechseleinheit 45 ragt das Sensorelement 40, welches zu einer Erfassung eines Drucks vorgesehen ist, durch die Öffnung in dem Grundkörper 46 sowie eine Öffnung in der Halterung der Düsenwechseleinheit 45 der Druckkopfeinheit 12 in einen Innenraum der Düsenwechseleinheit 45.

Des Weiteren weist die 3D-Druckvorrichtung 10 eine aktive Kühleinheit 34 auf. Die aktive Kühleinheit 34 ist als eine aktive Wasserkühleinheit ausgebildet. Die aktive Kühleinheit 34 ist zu einer aktiven Kühlung temperaturkritischer Bauteile vorgesehen.

Die aktive Kühleinheit 34 ist dazu vorgesehen, temperaturkritische Bauteile, welche sich in einer direkten Umgebung der Druckkopfeinheit 12 befinden, zu kühlen. Die aktive Kühleinheit 34 ist unter anderem dazu vorgesehen, eine an der Druckkopfeinheit 12 angeordnete Sensoreinheit 36 aktiv zu kühlen. Die aktive Kühleinheit 34 ist dazu vorgesehen, eine an der Druckkopfeinheit 12 angeordnete, als Vermessungssensor ausgebildete Sensoreinheit 36 zu kühlen.

Die Sensoreinheit 36 ist als ein Kalibrierungssensor ausgebildet, der dazu vorgesehen ist zu einer Kalibrierung aber auch zu einer Echtzeitvermessung des Druckobjekts 28 die Druckgrundplatte 22 und/oder ein Druckobjekt 28 zu vermessen. Die Sensoreinheit 36 ist an der Druckkopfeinheit 12 angeordnet, um ohne weitere Aktoren eine Bewegung der Sensoreinheit 36 zu ermöglichen. Die Sensoreinheit 36 ist direkt an dem Grundkörper 46 der Druckkopfeinheit 12 angeordnet. Ferner ist die Kühleinheit 34 dazu vorgesehen, die Lager 60, 62 der X-Positionierstange 64 und der Y-Positionierstange 66 zu kühlen. Die aktive Kühleinheit 34 ist hierzu in die Druckkopfeinheit 12 integriert.

Die aktive Kühleinheit 34 weist einen Hohlraum 90 im Inneren des Grundkörpers 46 der Druckkopfeinheit 12 auf. In dem Hohlraum 90 wird über eine nicht weiter sichtbare, außerhalb des Grundkörpers 46 angeordnete Pumpe destilliertes Wasser gefördert, welches zu einer Kühlung der Lager 60, 62 sowie der Sensoreinheit 36 vorgesehen ist. Die Pumpe ist über Silikonschläuche mit dem Hohlraum 90 verbunden. Das Wasser wird dabei zuerst durch den Hohlraum 90 und anschließend durch nicht weiter sichtbare Kühlrippen gefördert. Die Kühlrippen werden durch einen Ventilator gekühlt. Das Kühlen des Grundkörpers 46 der Druckkopfeinheit 12 verhindert zudem ein vorzeitiges Aufschmelzen des Filaments und somit ein Festkleben an der Wand des Kanals 70.

Zudem oder alternativ wäre auch denkbar, dass die 3D-Druckvorrichtung 10 eine Kühleinheit aufweist, welche zu einer Bereitstellung einer Sperrschicht zwischen einem Warm- und einem Kaltbereich in zumindest einem Betriebszustand dazu vorgesehen ist, zwischen dem Warmbereich und dem Kaltbereich einen definierten Gasstrom, insbesondere Luftstrom, zu erzeugen.

Ferner weist die 3D-Druckvorrichtung 10 eine Zuführvorrichtung 14 auf. Die Zuführvorrichtung 14 ist in zumindest einem Betrieb dazu vorgesehen, der Druckkopfeinheit 12 ein Druckmaterial 16 zuzuführen.

Die Zuführvorrichtung 14 ist dazu vorgesehen, das Druckmaterial 16 in Form eines Filaments der Druckkopfeinheit 12 zuzuführen. Die Zuführvorrichtung 14 ist an einer Rückseite des Gehäuses 54 der 3D-Druckvorrichtung 10 angeordnet. Die Zuführvorrichtung 14 ist als ein Bowdenextruder ausgebildet.

Grundsätzlich wäre jedoch auch eine andere, einem Fachmann als sinnvoll erscheinende Ausbildung der Zuführvorrichtung 14 denkbar. Die Zuführvorrichtung 14 weist ein Transportelement 18 auf. Das Transportelement 18 ist als eine Transportrolle ausgebildet. Das Transportelement 18 wird von einer Antriebseinheit der Zuführvorrichtung 14 angetrieben. Die Antriebseinheit ist als ein Elektromotor ausgebildet. Das Transportelement 18 ist in zumindest einem Betriebszustand zu einer Bewegung des Druckmaterials 16 mit einer definierten Vorschubgeschwindigkeit vorgesehen. Über die Zuführvorrichtung 14 wird ein als PEEK Filament ausgebildetes Druckmaterial 16 definiert gefördert. Die Zuführvorrichtung 14 zieht hierzu das Druckmaterial 16 aus einer Druckmaterialaufnahmeeinheit 92 der 3D-Druckvorrichtung 10.

Die Druckmaterialaufnahmeeinheit 92 ist ebenfalls an einer Rückseite des Gehäuses 54 der 3D-Druckvorrichtung 10 angeordnet. Die Druckmaterialaufnahmeeinheit 92 ist an einer Rückseite des Gehäuses 54 angeschraubt. Die Druckmaterialaufnahmeeinheit 92 weist eine zylindrische Grundform auf. Die Druckmaterialaufnahmeeinheit 92 dient zu einer drehbaren Aufnahme einer Filamentspule 94. Die Druckmaterialaufnahmeeinheit 92 weist hierzu eine zylindrische Außenwand 96 auf, welche das Druckmaterial 16 in einem eingesetzten Zustand nach außen hin begrenzt. Insbesondere bei Filamenten kann dadurch verhindert werden, dass sich das Druckmaterial 16 selbsttätig aufgrund seiner Eigenspannung entrollt. Insbesondere bei polymeren Druckmaterialien 16 mit einem hohen Biegemodul ist das Verwenden des Druckmaterials 16 auf einer Filamentspule 94 schwierig. Der Grund hierfür ist, dass die elastische Energie, die in dem Material gespeichert wird, so hoch ist, dass sobald das Material in einem elastischen Bereich verformt wird, dieses dazu neigt, wieder in die Ausgangsform zurückzugehen.

Da das Druckmaterial 16 jedoch zu einer Verwendung in der 3D-Druckvorrichtung 10 abgerollt werden muss, kann durch die Druckmaterialaufnahmeeinheit 92 verhindert werden, dass sich das Druckmaterial 16 unkontrolliert entrollt und sich möglicherweise sogar verheddert.

Die Druckmaterialaufnahmeeinheit 92 ist für Filamentspulen 94 mit einem Außendurchmesser von 200 mm oder 100 mm sowie mit einem Innendurchmesser von nicht weniger als 43 mm konzipiert. Grundsätzlich wären jedoch auch andere, einem Fachmann als sinnvoll erscheinende Dimensionen denkbar. In der Außenwand 96 der Druckmaterialaufnahmeeinheit 92 ist ein Schlitz 98 angeordnet. Der Schlitz 98 weist beispielhaft eine Dicke von ca. 35 mm in der Breite auf. Über den Schlitz 98 kann das Druckmaterial 16 von der Zuführvorrichtung 14 aus der Druckmaterialaufnahmeeinheit 92 gezogen werden. Die Zuführvorrichtung 14 und die Druckmaterialaufnahmeeinheit 92 sind beabstandet, zueinander angeordnet. Dadurch kann insbesondere eine teilweise Entspannung des als Filament ausgebildeten Druckmaterials 16 erreicht werden. Hierdurch kann eine Verarbeitung vorteilhaft verbessert werden.

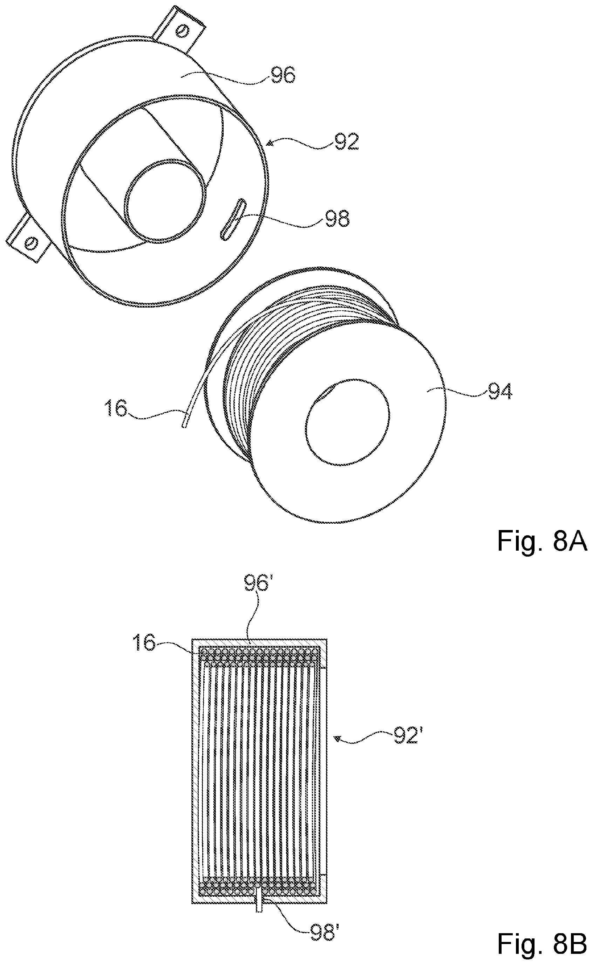

In der Figur 8B ist eine alternative Ausgestaltung der Druckmaterialaufnahmeeinheit 92' gezeigt. Die alternative Druckmaterialaufnahmeeinheit 92' weist ebenfalls eine zylindrische Grundform auf. Die alternative Druckmaterialaufnahmeeinheit 92' ist an einer Außenwand 96' krallenförmig ausgebildet. Die Druckmaterialaufnahmeeinheit 92' ist hierbei dazu vorgesehen, das Druckmaterial 16 direkt aufzunehmen. Das Druckmaterial 16 wird dabei direkt in der Druckmaterialaufnahmeeinheit 92' gelagert. Die Druckmaterialaufnahmeeinheit 92' umgreift dazu das Druckmaterial 16, wobei das als Filament ausgebildete Druckmaterial 16' aufgrund seiner Eigenspannung nach außen gegen die umgreifende Außenwand 96' der Druckmaterialaufnahmeeinheit 92' drückt. Dadurch kann auf eine zusätzliche Filamentspule 94 verzichtet werden. Die alternative Druckmaterialaufnahmeeinheit 92' kann alternativ zu der Druckmaterialaufnahmeeinheit 92 verwendet werden.

Zudem weist die 3D-Druckvorrichtung 10 ein optionales Magazin 51 zur Aufnahme verschiedener Druckmaterialien 16 auf. Das Magazin 51 ist dabei in der Figur 2 gestrichelt angedeutet. In dem Magazin 51 sind mehrere Druckmaterialaufnahmeeinheiten 92 mit insbesondere unterschiedlichen Druckmaterialien 16 aufgenommen. Über das Magazin 51 kann dabei insbesondere nicht weiter sichtbar zwischen verschiedenen Druckmaterialien 16 manuell durch Einspannen unterschiedlicher Filamente in der Zuführvorrichtung 14 gewechselt werden. Grundsätzlich wäre jedoch auch denkbar, dass ein Wechsel automatisch erfolgt. Es werden dabei von der 3D-Druckvorrichtung 10 abhängig von einer zu erzielenden Farbe und/oder Festigkeit des zu druckenden Druckobjekts 28 unterschiedliche Druckmaterialien 16 verwendet.

Über die Zuführvorrichtung 14 wird im Betrieb das Druckmaterial 16 von der Druckmaterialaufnahmeeinheit 92 zu der Druckkopfeinheit 12 gefördert. Der Druck in der Druckkopfeinheit 12 entsteht dabei durch das als Filament ausgebildete Druckmaterial 16 selbst, welches von der Zuführvorrichtung 14 gefördert wird. Der Druck in der Druckkopfeinheit 12 wird dabei über die Zuführvorrichtung 14 gesteuert. Die Zuführvorrichtung 14 wird von der Steuer- und Regeleinheit 44 der 3D-Druckvorrichtung 10 gesteuert. Abhängig von einer eingestellten Leistung der Antriebseinheit der Zuführvorrichtung 14 kann ein Druck des Druckmaterials 16 in der Druckkopfeinheit 12 gesenkt oder erhöht werden. Das Druckmaterial 16 wird über eine oberhalb der Druckkopfeinheit 12 befindliche obere Ebene in einen Innenraum des Gehäuses 54 der 3D-Druckvorrichtung 10 geleitet und dort nicht weiter sichtbar, der Druckkopfeinheit 12 zugeführt.

Entlang des Druckmaterials 16 betrachtet, ist zwischen der Zuführvorrichtung 14 und der Druckkopfeinheit 12 eine Trocknungseinheit 50 angeordnet. Die 3D-Druckvorrichtung 10 weist die Trocknungseinheit 50 auf. Die Trocknungseinheit 50 ist dazu vorgesehen, das Druckmaterial 16 vor einer Zuführung zu der Druckkopfeinheit 12 zu trocken. Die Trocknungseinheit 50 ist dazu vorgesehen, dem Druckmaterial 16 vor einem Aufschmelzen Wasser zu entziehen. Die Trocknung erfolgt dabei nicht weiter sichtbar über Heizelemente. Der Trocknungsprozess des Druckmaterials 16 ist dabei in die 3D-Druckvorrichtung 10 integriert. Grundsätzlich wäre jedoch auch denkbar, dass das Druckmaterial 16 vor einer Nutzung separat getrocknet wird.

Ferner weist die 3D-Druckvorrichtung 10 zumindest eine gegenüber der Druckgrundplatte 22 angeordnete Flächenheizungseinheit 26 auf. Die Flächenheizungseinheit 26 ist dazu vorgesehen, ein auf der Druckgrundplatte 22 angeordnetes Druckobjekt 28 aus einer von der Druckgrundplatte 22 differierenden Richtung partiell zu erhitzen. Die Flächenheizungseinheit 26 ist dazu vorgesehen, das Druckobjekt 28 von oben partiell zu erhitzen. Die Flächenheizungseinheit 26 ist dazu vorgesehen, eine Schichthaftung der einzeln aufgebrachten Schichten von Druckmaterial 16 signifikant zu erhöhen. Die Druckgrundplatte 22 und die Flächenheizungseinheit 26 sind relativ zueinander beweglich ausgeführt. Die Druckgrundplatte 22 ist in Z-Richtung beweglich ausgeführt, wohingegen die Flächenheizungseinheit 26 in X-Richtung und Y-Richtung beweglich ausgeführt ist. Die Flächenheizungseinheit 26 ist dazu relativ zu der Druckkopfeinheit 12 positionsfest angeordnet.

Die Flächenheizungseinheit 26 ist fest mit der zumindest einen Druckkopfeinheit 12 verbunden. Die Flächenheizungseinheit 26 wird dabei mit der Druckkopfeinheit 12 mitbewegt. Die Flächenheizungseinheit 26 ist in einer Ebene 3 mm über und parallel zu einer Druckebene der Düse 42 der Druckkopfeinheit 12 angeordnet. Die Flächenheizungseinheit 26 wird durch eine nicht weiter sichtbare Stromversorgungseinheit mit Energie versorgt. Die Flächenheizungseinheit 26 weist mehrere Heizelemente 30 auf. Die Heizelemente 30 weisen Glühdrähte auf. Grundsätzlich ist jedoch auch eine andere, einem Fachmann als sinnvoll erscheinende Ausgestaltung der Heizelemente 30 denkbar. Die Heizelemente 30 sind auf einer Glimmerplatte 100 angeordnet. Die Glimmerplatte 100 ist oberhalb der Heizelemente 30 angeordnet. Die Heizelemente 30 sind dazu vorgesehen, die Luftschicht zwischen der Druckkopfeinheit 12 und dem Druckobjekt 28 zu erwärmen. Die Wärme wird dabei über die Luftschicht auf das Druckobjekt 28 übertragen.

Dadurch wird die Oberfläche der bereits gedruckten Schichten des Druckobjekts 28 aktiviert, um eine vorteilhafte Haftung mit einer nächsten Schicht zu gewährleisten. Zudem kann durch die zusätzliche Wärme die Wärmeverteilung des Druckobjekts 28 verbessert werden. Die Temperatur dieser Luftschicht wird über einen nicht weiter sichtbaren Temperatursensor erfasst und geregelt. Grundsätzlich wäre jedoch auch denkbar, dass eine Temperatur des Druckobjekts 28 über eine Wärmebildkamera überwacht wird. Eine Regelung erfolgt dabei mittels der Steuer- und Regeleinheit 44. Über die Glimmerplatte 100 kann eine teilweise thermische Isolierung nach oben erreicht werden.

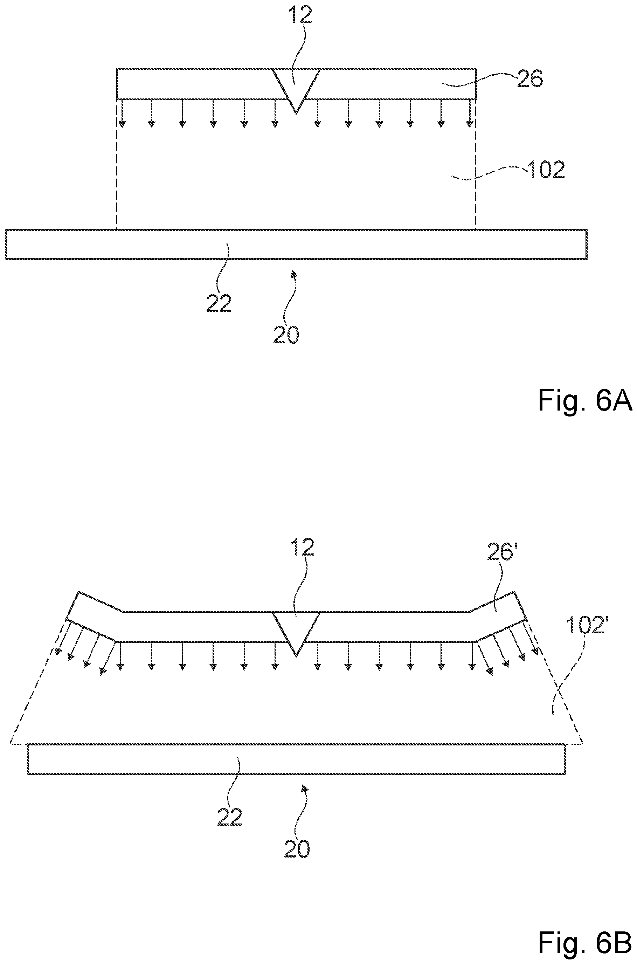

Die Flächenheizungseinheit 26 kann dabei insbesondere verschiedene Geometrien aufweist. In einer ersten Ausgestaltung ist die Flächenheizungseinheit 26 in einer Ebene angeordnet, sodass eine Wärmekonzentration 102 direkt unterhalb der Flächenheizungseinheit 26 erfolgt (Figur 6A). In einer zweiten Ausgestaltung wird eine Wärmekonzentration 102' der Flächenheizungseinheit 26' vergrößert, indem Endbereiche der Flächenheizungseinheit 26' gegenüber einem zentralen Bereich abgewinkelt sind (Figur 6B).

Die Heizelemente 30 der Flächenheizungseinheit 26 sind getrennt voneinander ansteuerbar ausgebildet. Jedes der Heizelemente 30 ist mit jeweils einem nicht weiter sichtbaren variablen Widerstand verbunden, über welchen eine Heizleistung des Heizelements 30 gesteuert werden kann. Die Heizelemente 30 werden von der Steuer- und Regeleinheit 44 angesteuert.

Des Weiteren weist die 3D-Druckvorrichtung 10 eine Lokalheizeinheit 32 auf, welche in einem Betriebszustand dazu vorgesehen ist, ein Druckobjekt 28 vor dem Aufdruck einer weiteren Schicht durch die Druckkopfeinheit 12 partiell zu erhitzen. Die Lokalheizeinheit 32 ist dazu vorgesehen, zur Verbesserung der Adhäsion zwischen den einzelnen Druckschichten eine oberste Druckschicht des Druckobjekts 28, vor dem Aufdruck einer weiteren Schicht durch die Druckkopfeinheit 12 partiell zu erhitzen. Dabei wäre zudem insbesondere denkbar, dass gezielt auf die Erhitzung durch die Lokalheizeinheit 32 partiell verzichtet wird, um eine gezielte Adhäsion zu vermeiden. Die Lokalheizeinheit 32 ist als ein Heizstrahler, insbesondere als ein Infrarot-Heizstrahler, ausgebildet. Die Lokalheizeinheit 32 ist an der Druckkopfeinheit 12 angeordnet. Die Lokalheizeinheit 32 ist drehbar um die Druckkopfeinheit 12 angeordnet.

Die Lokalheizeinheit 32 ist über ein Führungssystem 104 an dem Grundkörper 46 der Druckkopfeinheit 12 angeordnet. Die Lokalheizeinheit 32 ist über eine nicht weiter sichtbare Antriebseinheit über das Führungssystem 104 relativ zu der Druckkopfeinheit 12 verdrehbar. Eine Verdrehung erfolgt dabei insbesondere in der Druckebene. Die Lokalheizeinheit 32 umfährt dabei die Druckkopfeinheit 12. Die Steuer- und Regeleinheit 44 steuert eine Drehposition der Lokalheizeinheit 32. Zudem steuert die Steuer- und Regeleinheit 44 eine Heizleistung der Lokalheizeinheit 32. Die Steuer- und Regeleinheit 44 steuert dabei die Lokalheizeinheit 32 derart an, dass die Lokalheizeinheit 32 der Druckkopfeinheit 12 während eines Druckverfahrens vorrauseilt. Durch ein Vorrauseilen kann wiederum erreicht werden, dass eine oberste Schicht des Druckobjekts 28 unmittelbar vor einem Aufbringen einer weiteren Schicht angeschmolzen wird.

Die 3D-Druckvorrichtung 10 weist die Steuer- und Regeleinheit 44 auf. Die Steuer- und Regeleinheit 44 ist in der oberen Ebene des Gehäuses 54 der 3D-Druckvorrichtung 10 angeordnet. Die Steuer- und Regeleinheit 44 ist als eine Recheneinheit ausgebildet. Die Steuer- und Regeleinheit 44 ist als ein integriertes Computersystem ausgebildet. Die Steuer- und Regeleinheit 44 weist einen nicht weiter sichtbaren Touch-LCD-Display, einen Netzwerkanschluss und einen USB.Anschluss auf. Ferner ist die Steuer- und Regeleinheit 44 zu einer Steuerung und Regelung von Druckparametern vorgesehen. Die Steuer- und Regeleinheit 44 ist zu einer Steuerung und Regelung von Druckparametern in Echtzeit vorgesehen. Die Steuer- und Regeleinheit 44 dient einer optimalen Anpassung von Druckparametern an einen Druckprozess.

Die Steuer- und Regeleinheit 44 ist zur Berechnung einer Gleichung zu einer Prozessqualität vorgesehen. Die Steuer- und Regeleinheit 44 ist dazu vorgesehen, abhängig von einer gewünschten Qualität des Druckobjekts 28 und/oder einer gewünschten Druckgeschwindigkeit, eine Druckgeschwindigkeit, eine Temperatur der Druckkopfeinheit 12, eine Temperatur der Druckgrundplatte 22, eine Temperatur des Druckobjekts 28 oder dessen Umgebung und/oder ein Druck des Druckmaterials 16 in der Düse 42 anzupassen.

Im Betrieb wird der Druckvorgang von der Steuer- und Regeleinheit 44 der 3D-Druckvorrichtung 10 gesteuert und geregelt.

Vor dem eigentlichen Druckprozess werden die Objektdaten eines zu druckenden Objekts auf die 3D-Druckvorrichtung 10 übertragen. Die Objekte werden in Dateiformaten wie beispielsweise .stl, .obj oder .amf, die durch eine CAD Software erstellt wurden, auf die 3D-Druckvorrichtung 10 übertragen.

Vorzugsweise werden die Objektdaten des zu druckenden Objekts jedoch in einem speziell für die 3D-Druckvorrichtung 10 entwickelten CAD Dateiformat auf die 3D-Druckvorrichtung 10 übertragen. Dieses spezielle CAD Dateiformat enthält über eine reine Form zusätzliche Informationen wie Toleranzen, Ausdehnungen, Festigkeitseigenschaften usw. Anschließend werden die CAD-Daten mittels einer Slicer-Software in einzelne Schichten aufgeteilt. Die Slicer-Software transformiert dabei das 3D-Model der CAD Software in einen G-Code der 3D-Druckvorrichtung 10. Das Aufteilen in Schichten kann dabei sowohl extern als auch in der 3D-Druckvorrichtung 10 selbst erfolgen.

Hierdurch kann eine vorteilhaft hohe Druckqualität erreicht werden, da eine Auflösung des 3D-Models an eine Druckauflösung der 3D-Druckvorrichtung 10 angepasst werden kann. Zudem wird vor dem Druckvorgang ein Schrumpfprozess des Druckobjekts 28 bei einer Abkühlung nach einem Druckvorgang berechnet. Die Steuer- und Regeleinheit 44 berechnet dazu abhängig von einer Geometrie des Druckobjekts 28 ein Schrumpfverhalten des Druckobjekts 28 und passt eine Dimensionierung der Schichten des Druckobjekts 28 an dieses Schrumpfverhalten an. Die Schichten werden dabei insbesondere größer gedruckt als das 3D-Model, da das Druckobjekt 28 nach dem Druckvorgang schrumpft. Die Druckroutine der einzelnen Schichten wird in einen Maschinencode übersetzt und an einen Mikrokontroller der Steuer- und Regeleinheit 44 gesendet.

Die Software der Steuer- und Regeleinheit 44 ist eine webbasierte Anwendung. Anschließend kann ein Druckprozess gestartet werden. Während des Druckprozesses werden Motoren, die Flächenheizungseinheit 26, die Druckgrundplatte 22, die aktive Kühleinheit 34, die Lokalheizeinheit 32 usw. durch einen programmierbaren Mikrokontroller gesteuert. Die Positionsangaben der Motoren werden vom Mikrokontroller aus dem Maschinencode ausgelesen. Ferner werden Prozessparameter wie Temperaturen des Druckobjekts 28 während des Druckvorgangs angezeigt.

Für einen Druckvorgang wird von der Zuführvorrichtung 14 Druckmaterial 16 aus der Druckmaterialaufnahmeeinheit 92 gezogen. Die Zuführvorrichtung 14 fördert das Druckmaterial 16 zu der Druckkopfeinheit 12. Das Druckmaterial 16 wird vor einer Zuführung der Druckkopfeinheit 12 mittels der Trocknungseinheit 50 getrocknet. Grundsätzlich wäre jedoch auch denkbar, dass das Druckmaterial 16 von einem Druckprozess separat getrocknet wird. Anschließend wird das von einem Filament gebildete Druckmaterial 16 durch den Kanal 70 des Grundkörpers 46 der Druckkopfeinheit 12 gefördert. Hier wird das von einem Filament gebildete Druckmaterial 16 vor einer Aufschmelzung durch die Kühleinheit 34 aktiv gekühlt. Anschließend wird das Druckmaterial 16 in die Düse 42 der Druckkopfeinheit 12 gefördert, wo das Druckmaterial 16 von der Düsenheizung 68 aufgeschmolzen wird. Nach einem Aufschmelzen kann das Druckmaterial 16 über die Auslassöffnung 72 der Düse 42 extrudiert werden.

Vor einem Druck des Druckobjekts 28, wird eine Stabilisierungsschicht 52 auf die Druckgrundplatte 22 aufgedruckt. Die Stabilisierungsschicht 52 weist eine Grundfläche auf, welche größer als eine Grundfläche einer ersten Schicht des Druckobjekts 28 ist. Die Stabilisierungsschicht 52 ist rundherum abgerundet und vollständig mit Material ausgefüllt. Die Stabilisierungsschicht 52 weist eine elliptische Grundfläche auf. Die Schicht ist dabei während des Druckvorgangs des Druckobjekts 28 mit dem Druckobjekt 28 verbunden. Dadurch kann zuverlässig Warping an dem Druckobjekt 28 vermieden werden. Die Stabilisierungsschicht 52 wird nach einem gesamten Druckprozess von dem Druckobjekt 28 entfernt. Die Stabilisierungsschicht 52 wird lediglich während des Druckvorgangs benötigt.

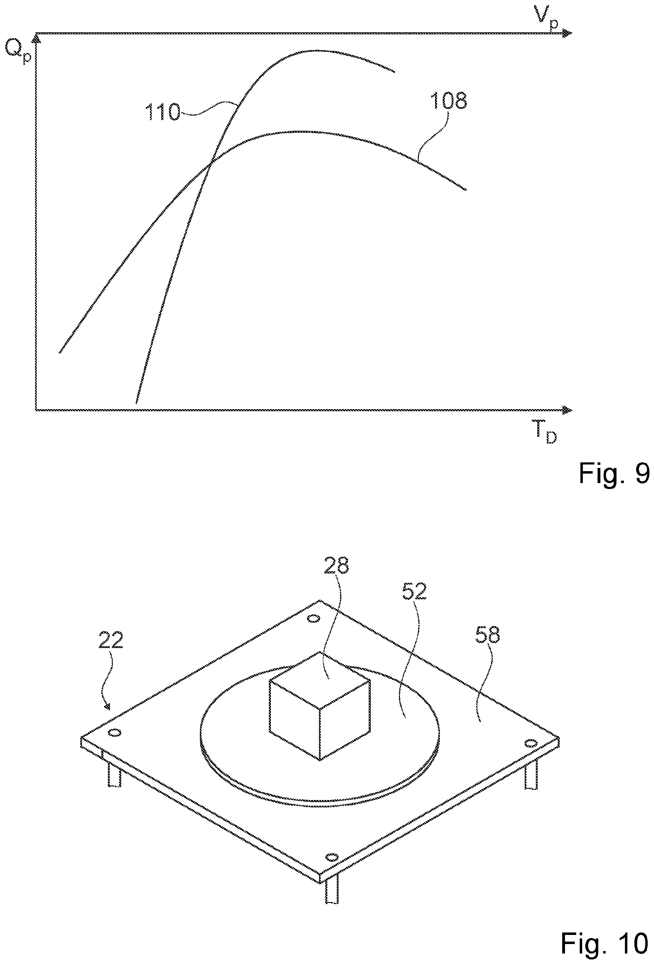

Nach einem Druck der Stabilisierungsschicht 52 wird das Druckobjekt 28 direkt auf die Stabilisierungsschicht 52 aufgedruckt (Figur 10).

Während des Druckprozesses werden abhängig von Kenngrößen unterschiedliche Heizelemente 30 der Flächenheizungseinheit 26 angesteuert.

Die Heizelemente 30 der Flächenheizungseinheit 26 werden abhängig von Kenngrößen des Druckobjekts 28 und Kenngrößen des Druckvorgangs angesteuert. Die Heizelemente 30 der Flächenheizungseinheit 26 werden abhängig von einer Form und einer Beschaffenheit einer obersten Schicht des Druckobjekts 28 angesteuert. Die Heizelemente 30 werden dabei derart angesteuert, dass genau diese Heizelemente 30 der Flächenheizungseinheit 26 aktiviert werden, welche sich direkt über der obersten Schicht des Druckobjekts 28 befinden. Dadurch kann erreicht werden, dass ein Abkühlen der obersten Schicht verhindert wird.

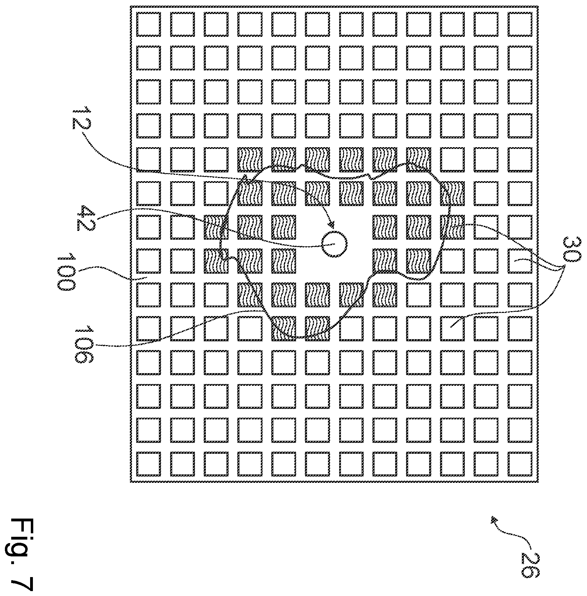

In der Figur 7 ist beispielhaft die Form der obersten Schicht des Druckobjekts 28 durch die Linie 106 stilisiert, wohingegen aktivierte Heizelemente 30 der Flächenheizungseinheit 26 durch eine Wellenlinienschraffur dargestellt sind. Ferner werden durch Ansteuern unterschiedlicher Heizelemente 30 der Flächenheizungseinheit 26 gezielt Teilbereiche des Druckobjekts 28 erhitzt. Wird mittels des nicht weiter sichtbaren Temperatursensors festgestellt, dass Bereiche des bereits gedruckten Teilbereichs des Druckobjekts 28 zu stark abkühlen, werden gezielt Heizelemente 30 über diesen Bereichen erhöht angesteuert, um eine weitere Abkühlung zu vermeiden.

Zusätzlich zu der Flächenheizungseinheit 26 wird das Druckobjekt 28 vor dem Aufdruck einer weiteren Schicht vorrauseilend partiell durch die Lokalheizeinheit 32 erhitzt. Dabei wird eine oberste, bereits gedruckte Schicht des Druckobjekts 28 aufgeschmolzen. Die Lokalheizeinheit 32 wird dazu von der Steuer- und Regeleinheit 44 während des Druckprozesses ständig in Bewegungsrichtung der Druckkopfeinheit 12 vor der Druckkopfeinheit 12 angeordnet. Dadurch kann ein gezieltes Verschmelzen von Schichten erreicht werden.

Ferner wird das Druckobjekt 28 während des Druckvorgangs teilweise vermessen. Das Druckobjekt 28 wird während des Druckvorgangs mittels der Sensoreinheit 36, welche als Kalibrierungssensor ausgebildet ist, vermessen. Das Druckobjekt 28 wird während des Druckvorgangs vermessen, um mögliche Abweichungen zwischen dem Druckobjekt 28 und einem auf der Steuer- und Regeleinheit 44 hinterlegten 3D-Model festzustellen. Abhängig von einem Vermessungsergebnis werden Druckparameter des Druckvorgangs teilweise angepasst. Die Druckparameter eines Druckvorgangs werden abhängig von einer Abweichung zwischen dem Druckobjekt 28 und dem auf der Steuer- und Regeleinheit 44 hinterlegten 3D-Model angepasst.

Dadurch können mögliche Druckungenauigkeiten während des Druckvorgangs verbessert werden. Zudem kann die 3D-Druckvorrichtung 10 abhängig von einem Vermessungsergebnis selbsttätig Nachbesserungen an dem Druckobjekt 28 durchführt. Sollten bei einem Vermessungsergebnis erhebliche Abweichungen zwischen dem Druckobjekt 28 und einem auf der Steuer- und Regeleinheit 44 hinterlegten 3D-Model auftreten, können gezielt Nachbesserungen durchgeführt werden, um die Abweichungen zu verbessern.

Zusätzlich wäre auch denkbar, dass die 3D-Druckvorrichtung 10 ein integriertes Materialtestsystem aufweist, sodass während oder nach dem Druckvorgang die Festigkeitseigenschaften des Druckobjekts 28 überprüft werden können.

Des Weiteren findet während des Druckvorgangs ständig eine Anpassung von Druckparametern durch die Steuer- und Regeleinheit 44 statt. Die Steuer- und Regeleinheit 44 passt die Druckparameter optimal an einen Druckprozess. Die Steuer- und Regeleinheit 44 berechnet hierzu eine Gleichung zu einer Prozessqualität. Über die Gleichung wird abhängig von einer gewünschten Qualität des Druckobjekts 28 und einer gewünschten Druckgeschwindigkeit, eine benötigte Druckgeschwindigkeit, Temperatur der Druckkopfeinheit 12, Temperatur der Druckgrundplatte 22, Temperatur des Druckobjekts 28 oder dessen Umgebung und ein benötigter Druck des Druckmaterials 16 in der Düse 42 berechnet. Die berechnete Druckgeschwindigkeit, Temperatur der Druckkopfeinheit 12, Temperatur der Druckgrundplatte 22, Temperatur des Druckobjekts 28 oder dessen Umgebung und der berechnete Druck des Druckmaterials 16 in der Düse 42 wird anschließend von der Steuer- und Regeleinheit 44 eingestellt. Diese Druckparameter werden von der Steuer- und Regeleinheit 44 überwacht und geregelt, um ein optimales Druckergebnis zu erhalten. So wird abhängig von einem Druck des Druckmaterials 16 in der Druckkopfeinheit 12 eine Druckgeschwindigkeit eingestellt. Das in der Figur 9 gezeigte Diagramm zeigt vereinfacht einen Zusammenhang der Druckparameter der 3D-Druckvorrichtung 10. Das Diagramm zeigt einen Zusammenhang zwischen der Düsentemperatur T_{D}, der Qualität Qₚ des Druckobjekts 28 und der Druckgeschwindigkeit vₚ. Ferner zeigt das Diagramm eine erste Kurve 108, welche einen direkten Zusammenhang zwischen der Düsentemperatur T_{D} und der Qualität Qₚ des Druckobjekts 28 darstellt, und eine zweite Kurve 110, welche einen direkten Zusammenhang zwischen der Druckgeschwindigkeit vₚ und der Qualität Qₚ des Druckobjekts 28 darstellt.

Ferner wird zudem eine Farbe eines zu druckenden Druckobjekts 28 durch Anpassung von Druckparametern beeinflusst. Eine Farbe eines zu druckenden Druckobjekts 28 wird durch Anpassung einer Drucktemperatur und eines Drucks des Druckmaterials 16 in der Druckkopfeinheit 12 beeinflusst. Die Steuer- und Regeleinheit 44 passt daher abhängig von einer gewünschten Farbe des Druckobjekts 28 eine Drucktemperatur und ein Druck des Druckmaterials 16 an. Es sind jedoch auch andere, einem Fachmann als sinnvoll erscheinende Druckparameter zu einer Anpassung einer Farbe eines zu druckenden Druckobjekts 28 denkbar.

Nach einem Druckverfahren wird die Druckgrundplatte 22 zur Ablösung des Druckobjekts 28 aktiv gekühlt. Die Druckgrundplatte 22 wird hierbei über die Kühlvorrichtung 24 gekühlt. Durch die unterschiedlichen thermischen Ausdehnungskoeffizienten der Druckgrundplatte 22 und des Druckobjekts 28 löst sich eine Haftung zwischen der Druckgrundplatte 22 und dem Druckobjekt 28. Anschließend kann das Druckobjekt 28 über die Öffnung 56 in dem Gehäuse 54 aus der 3D-Druckvorrichtung 10 entnommen werden.

## Patentansprüche

1. 3D-Druckvorrichtung, insbesondere FFF-Druckvorrichtung, mit zumindest einer Druckkopfeinheit (12) und mit zumindest einer Zuführvorrichtung (14), welche in zumindest einem Betriebszustand dazu vorgesehen ist, der zumindest einen Druckkopfeinheit (12) ein Druckmaterial (16) zuzuführen, wobei mittels der Druckkopfeinheit (12) in zumindest einem Betriebszustand, ein zumindest teilweise von einem Hochleistungskunststoff, nämlich einem Hochleistungsthermoplast, gebildetes Druckmaterial (16) aufschmelzbar ist und wobei die 3D-Druckvorrichtung eine Grundeinheit (20) mit zumindest einer beheizbaren, insbesondere regelbar beheizbaren, Druckgrundplatte (22), auf welche während eines Druckvorgangs aufgedruckt wird, aufweist **dadurch gekennzeichnet, dass** zumindest eine gegenüber der Druckgrundplatte (22) angeordnete Flächenheizungseinheit (26, 26'), welche dazu vorgesehen ist, ein auf der Druckgrundplatte (22) angeordnetes Druckobjekt (28) aus einer von der Druckgrundplatte (22) differierenden Richtung zumindest partiell zu erhitzen vorgesehen ist, und die zumindest eine Druckgrundplatte (22) und die zumindest eine Flächenheizungseinheit (26, 26') relativ zueinander beweglich ausgeführt sind, sowie zusätzlich eine Lokalheizeinheit (32) vorgesehen ist, welche in einem Betriebszustand dazu vorgesehen ist, ein Druckobjekt (28) vor dem Aufdruck einer weiteren Schicht durch die zumindest eine Druckkopfeinheit (12) partiell zu erhitzen, wobei die Grundeinheit (20) zumindest eine Kühlvorrichtung (24) aufweist, die zu einer aktiven Abkühlung der zumindest einen Druckgrundplatte (22) vorgesehen ist.

2. 3D-Druckvorrichtung nach Anspruch 1,
**dadurch gekennzeichnet, dass**
die zumindest eine Zuführvorrichtung (14) dazu vorgesehen ist, das Druckmaterial (16) in Form eines Filaments der zumindest einen Druckkopfeinheit (12) zuzuführen.

3. 3D-Druckvorrichtung nach Anspruch 2, **dadurch gekennzeichnet, dass** die zumindest eine Zuführvorrichtung (14) zumindest ein Transportelement (18) aufweist, das in zumindest einem Betriebszustand zu einer Bewegung des Druckmaterials (16) mit einer definierten Vorschubgeschwindigkeit vorgesehen ist.

4. 3D-Druckvorrichtung nach einem oder mehreren der vorhergehenden Ansprüche, **dadurch gekennzeichnet, dass** die zumindest eine Flächenheizungseinheit (26, 26') mehrere Heizelemente (30) aufweist, die getrennt voneinander ansteuerbar ausgebildet sind.

5. 3D-Druckvorrichtung nach einem der vorhergehenden Ansprüche, **gekennzeichnet durch** eine aktive Kühleinheit (34), insbesondere eine aktive Wasserkühleinheit, welche zu einer aktiven Kühlung zumindest eines temperaturkritischen Bauteils vorgesehen ist.

6. 3D-Druckvorrichtung nach Anspruch 5, **dadurch gekennzeichnet, dass** die aktive Kühleinheit (34) dazu vorgesehen ist, zumindest eine an der zumindest einen Druckkopfeinheit (12) angeordnete Sensoreinheit (36) aktiv zu kühlen.

7. 3D-Druckvorrichtung nach einem der vorhergehenden Ansprüche, **gekennzeichnet durch** eine Sensoreinheit (38), welche zu einer direkten Messung eines Drucks des Druckmaterials (16) in der zumindest einen Druckkopfeinheit (12) vorgesehen ist.

8. 3D-Druckvorrichtung nach Anspruch 7, **dadurch gekennzeichnet, dass** die Sensoreinheit (38) zumindest ein Sensorelement (40) aufweist, welches in einer Düse (42, 42', 42") der zumindest einen Druckkopfeinheit (12) angeordnet ist.

9. 3D-Druckvorrichtung nach einem der vorhergehenden Ansprüche, **gekennzeichnet durch** eine Steuer- und/oder Regeleinheit (44), welche zu einer Steuerung und/oder Regelung zumindest eines Druckparameters vorgesehen ist.

10. 3D-Druckvorrichtung nach einem der vorhergehenden Ansprüche, **dadurch gekennzeichnet, dass** die zumindest eine Druckkopfeinheit (12) zumindest eine Düsenwechseleinheit (45) mit zumindest zwei Düsen (42, 42', 42") aufweist, die zu einem demontagelosen Wechsel zwischen den zumindest zwei Düsen (42, 42', 42") vorgesehen ist.

11. 3D-Druckvorrichtung nach einem der vorgehenden Ansprüche, **dadurch gekennzeichnet, dass** die zumindest eine Druckkopfeinheit (12) zumindest einen Grundkörper (46) und zumindest eine Düse (42, 42', 42") aufweist, welche getrennt von dem Grundkörper (46) demontierbar ausgebildet ist.

12. 3D-Druckvorrichtung nach einem der vorgehenden Ansprüche, **dadurch gekennzeichnet, dass** die zumindest eine Druckkopfeinheit (12) zumindest einen Grundkörper (46) und zumindest ein Hot-End (48) aufweist, welches getrennt, insbesondere werkzeuglos, von dem Grundkörper (46) demontierbar ausgebildet ist.

13. 3D-Druckvorrichtung nach einem der vorhergehenden Ansprüche, **gekennzeichnet durch** eine Trocknungseinheit (50), welche dazu vorgesehen ist, ein Druckmaterial (16), vor dessen Zuführung der Druckkopfeinheit (12) zu trocken.

14. 3D-Druckvorrichtung nach einem der vorhergehenden Ansprüche, **gekennzeichnet durch** ein Magazin (51) zur Aufnahme verschiedener Druckmaterialien (16).

15. Verfahren zum Betrieb einer 3D-Druckvorrichtung (10) nach einem der Ansprüche 1 bis 14 mit einem zumindest teilweise von einem Hochleistungskunststoff, nämlich einem Hochleistungsthermoplast, gebildeten Druckmaterial (16).

16. Verfahren nach Anspruch 15, **dadurch gekennzeichnet, dass** ein Druckvorgang von einer Steuer- und/oder Regeleinheit (44) der 3D-Druckvorrichtung (10) gesteuert und/oder geregelt wird.

17. Verfahren nach Anspruch 16, **dadurch gekennzeichnet, dass** abhängig von zumindest einer Kenngröße unterschiedliche Heizelemente (30) der Flächenheizungseinheit (26) angesteuert werden.

18. Verfahren nach Anspruch 17, **dadurch gekennzeichnet, dass** durch Ansteuern unterschiedlicher Heizelemente (30) der Flächenheizungseinheit (26) gezielt Teilbereiche des Druckobjekts (28) erhitzt werden.

19. Verfahren nach einem der Ansprüche 15 bis 18, **dadurch gekennzeichnet, dass** das Druckobjekt (28) vor dem Aufdruck einer weiteren Schicht vorrauseilend partiell durch die Lokalheizeinheit (32) erhitzt wird.

20. Verfahren nach einem der Ansprüche 15 bis 19, **dadurch gekennzeichnet, dass** abhängig von einem Druck des Druckmaterials (16) in der zumindest einen Druckkopfeinheit (12) eine Druckgeschwindigkeit eingestellt wird.

21. Verfahren nach einem der Ansprüche 15 bis 20, **dadurch gekennzeichnet, dass** ein Schrumpfprozess des Druckobjekts (28) bei einer Abkühlung nach einem Druckvorgang vor und/oder während dem Druckvorgang berechnet und/oder berücksichtigt wird.

22. Verfahren nach einem der Ansprüche 16 bis 21, **dadurch gekennzeichnet, dass** ein Druckobjekt (28) während des Druckvorgangs zumindest teilweise vermessen wird.

23. Verfahren nach Anspruch 22, **dadurch gekennzeichnet, dass** die Druckparameter eines Druckvorgangs abhängig von einem Vermessungsergebnis zumindest teilweise angepasst werden.

24. Verfahren nach einem der Ansprüche 15 bis 23, **dadurch gekennzeichnet, dass** eine Farbe eines zu druckenden Druckobjekts (28) durch Anpassung wenigstens eines Druckparameters beeinflusst wird.

25. Verfahren nach einem der Ansprüche 15 bis 24, **dadurch gekennzeichnet, dass** ein Druckmaterial (16) vor einer Zuführung der zumindest einen Druckkopfeinheit (12) getrocknet wird.

26. Verfahren nach einem der Ansprüche 15 bis 25, **dadurch gekennzeichnet, dass** vor einem Druck eines Druckobjekts (28) eine Stabilisierungsschicht (52) mit einer Grundfläche auf die Druckgrundplatte (22) aufgedruckt wird, welche größer als eine Grundfläche einer ersten Schicht des Druckobjekts (28) ist.

27. Verfahren nach einem der Ansprüche 15 bis 26, **dadurch gekennzeichnet, dass** die Druckgrundplatte (22) nach einem Druckverfahren zur Ablösung des Druckobjekts (28) aktiv gekühlt wird.

## Claims

1. 3D printing device, in particular FFF printing device, having at least one printing head unit (12) and having at least one feeding device (14) which, in at least one operating state, is provided for the purpose of feeding a printing material (16) to the at least one printing head unit (12), wherein, by means of the printing head unit (12), in at least one operating state, a printing material (16) which is at least partially composed of a high-performance plastic, namely a high-performance thermoplastic, can be melted, and wherein the 3D printing device has a base unit (20) having at least one heatable, in particular controllably heatable, printing base plate (22) onto which printing is carried out during a printing process, **characterized in that** at least one surface heating unit (26, 26') arranged opposite the printing base plate (22) is provided, which is adapted to at least partially heat a printing object (28) arranged on the printing base plate (22) from a direction differing from the printing base plate (22), and the at least one printing base plate (22) and the at least one surface heating unit (26, 26') are designed to be movable relative to one another, and additionally a local heating unit (32) is provided which, in an operating state, is provided to partially heat a printing object (28) before printing a further layer by the at least one printing head unit (12), wherein the base unit (20) has at least one cooling device (24) which is provided for active cooling of the at least one printing base plate (22).

2. 3D printing device according to claim 1, **characterized in that** the at least one feeding device (14) is provided for feeding the printing material (16) in the form of a filament to the at least one printing head unit (12).

3. 3D printing device according to claim 2, **characterized in that** the at least one feeding device (14) has at least one transport element (18) which is provided in at least one operating state for moving the printing material (16) at a defined feed speed.

4. 3D printing device according to one or more of the preceding claims, **characterized in that** the at least one surface heating unit (26, 26') has several heating elements (30) which are designed to be controllable separately from one another.

5. 3D printing device according to one or more of the preceding claims, **characterized by** an active cooling unit (34), in particular an active water-cooling unit, which is provided for active cooling of at least one temperature-critical component.

6. 3D printing device according to claim 5, **characterized in that** the active cooling unit (34) is provided for actively cooling at least one sensor unit (36) arranged on the at least one printing head unit (12).

7. 3D printing device according to one of the preceding claims, **characterized by** a sensor unit (38) which is provided for directly measuring a pressure of the printing material (16) in the at least one printing head unit (12).

8. 3D printing device according to claim 7, **characterized in that** the sensor unit (38) comprises at least one sensor element (40) which is arranged in a nozzle (42, 42', 42") of the at least one printing head unit (12).

9. 3D printing device according to one of the preceding claims, **characterized by** a control and/or regulating unit (44) which is provided for controlling and/or regulating at least one printing parameter.

10. 3D printing device according to one of the preceding claims, **characterized in that** the at least one printing head unit (12) has at least one nozzle changing unit (45) with at least two nozzles (42, 42', 42"), which is provided for a disassembly-free change between the at least two nozzles (42, 42', 42").

11. 3D printing device according to one of the preceding claims, **characterized in that** the at least one printing head unit (12) has at least one base body (46) and at least one nozzle (42, 42', 42") which is designed to be dismountable separately from the base body (46).

12. 3D printing device according to one of the preceding claims, **characterized in that** the at least one printing head unit (12) has at least one base body (46) and at least one hot end (48), which is designed to be removable separately, in particular without tools, from the base body (46).

13. 3D printing device according to one of the preceding claims, **characterized by** a drying unit (50), which is provided for drying a printing material (16) before feeding it to the printing head unit (12).

14. 3D printing device according to one of the preceding claims, **characterized by** a magazine (51) for holding various printing materials (16).

15. Method for operating a 3D printing device (10) according to one of the claims 1 to 14 with a printing material (16) formed at least partially by a high-performance plastic, namely a high-performance thermoplastic.

16. Method according to claim 15, **characterized in that** a printing process is controlled and/or regulated by a control and/or regulating unit (44) of the 3D printing device (10).

17. Method according to claim 16, **characterized in that** different heating elements (30) of the surface heating unit (26) are controlled depending on at least one characteristic variable.

18. Method according to claim 17, **characterized in that** partial areas of the printing object (28) are heated in a targeted manner by controlling different heating elements (30) of the surface heating unit (26).

19. Method according to one of claims 15 to 18, **characterized in that** the printing object (28) is partially heated by the local heating unit (32) before the printing of a further layer.

20. Method according to one of claims 15 to 19, **characterized in that** a printing speed is set in the at least one printing head unit (12) depending on a printing of the printing material (16).

21. Method according to one of claims 15 to 20, **characterized in that** a shrinking process of the printing object (28) during cooling after a printing process before and/or during the printing process is calculated and/or taken into account.

22. Method according to one of claims 16 to 21, **characterized in that** a printing object (28) is at least partially measured during the printing process.

23. Method according to claim 22, **characterized in that** the printing parameters of a printing process are at least partially adjusted depending on a measurement result.

24. Method according to one of claims 15 to 23, **characterized in that** a color of a printing object (28) to be printed is influenced by adjusting at least one printing parameter.

25. Method according to one of claims 15 to 24, **characterized in that** a printing material (16) is dried before feeding the at least one printing head unit (12).

26. Method according to one of claims 15 to 25, **characterized in that** before a printing of a printing object (28), a stabilizing layer (52) with a base area which is larger than a base area of a first layer of the printing object (28) is printed onto the printing base plate (22).

27. Method according to one of claims 15 to 26, **characterized in that** the printing base plate (22) is actively cooled after a printing process for detaching the printing object (28).

## Revendications

1. Dispositif d'impression 3D, en particulier dispositif d'impression FFF, avec au moins une unité de tête d'impression (12) et avec au moins un dispositif d'amenée (14) qui, dans au moins un état de fonctionnement, est prévu pour amener un matériau d'impression (16) à ladite au moins une unité de tête d'impression (12), dans lequel, au moyen de l'unité de tête d'impression (12), dans au moins un état de fonctionnement, un matériau d'impression (16) formé au moins partiellement d'une matière plastique à haute performance, à savoir une matière thermoplastique à haute performance, peut être fondu et dans lequel le dispositif d'impression 3D présente une unité de base (20) avec au moins une plaque de base d'impression (22) pouvant être chauffée, en particulier chauffée de manière régulée, sur laquelle l'impression est effectuée pendant un processus d'impression,
**caractérisé en ce qu'**il est prévu au moins une unité de chauffage surfacique (26, 26') disposée en face de la plaque de base d'impression (22), qui est prévue pour chauffer au moins partiellement un objet d'impression (28) disposé sur la plaque de base d'impression (22) à partir d'une direction différente de celle de la plaque de base d'impression (22), et ladite au moins une plaque de base d'impression (22) et ladite au moins une unité de chauffage surfacique (26, 26') sont conçues pour être mobiles l'une par rapport à l'autre, et il est prévu en outre une unité de chauffage local (32) qui, dans un état de fonctionnement, est prévue pour chauffer partiellement un objet d'impression (28) avant l'impression d'une autre couche par ladite au moins une unité de tête d'impression (12), dans lequel l'unité de base (20) présente au moins un dispositif de refroidissement (24) qui est prévu pour un refroidissement actif de ladite au moins une plaque de base d'impression (22).

2. Dispositif d'impression 3D selon la revendication 1, **caractérisé en ce que** ledit au moins un dispositif d'amenée (14) est prévu pour amener le matériau d'impression (16) sous la forme d'un filament à ladite au moins une unité de tête d'impression (12).

3. Dispositif d'impression 3D selon la revendication 2, **caractérisé en ce que** ledit au moins un dispositif d'amenée (14) présente au moins un élément de transport (18) qui est prévu, dans au moins un état de fonctionnement, pour déplacer le matériau d'impression (16) à une vitesse d'avance définie.

4. Dispositif d'impression 3D selon l'une ou plusieurs des revendications précédentes, **caractérisé en ce que** ladite au moins une unité de chauffage surfacique (26, 26') présente plusieurs éléments chauffants (30) qui sont conçus pour pouvoir être commandés séparément les uns des autres.

5. Dispositif d'impression 3D selon l'une des revendications précédentes, **caractérisé par** une unité de refroidissement actif (34), en particulier une unité de refroidissement actif à eau, qui est prévue pour un refroidissement actif d'au moins un composant à température critique.

6. Dispositif d'impression 3D selon la revendication 5, **caractérisé en ce que** l'unité de refroidissement actif (34) est prévue pour refroidir activement au moins une unité de détection (36) disposée sur ladite au moins une unité de tête d'impression (12).

7. Dispositif d'impression 3D selon l'une des revendications précédentes, **caractérisé par** une unité de détection (38) qui est prévue pour la mesure directe d'une pression du matériau d'impression (16) dans ladite au moins une unité de tête d'impression (12).

8. Dispositif d'impression 3D selon la revendication 7, **caractérisé en ce que** l'unité de détection (38) comprend au moins un élément de détection (40) qui est disposé dans une buse (42, 42', 42") de ladite au moins une unité de tête d'impression (12).

9. Dispositif d'impression 3D selon l'une des revendications précédentes, **caractérisé par** une unité de commande et/ou de régulation (44) qui est prévue pour commander et/ou réguler au moins un paramètre d'impression.

10. Dispositif d'impression 3D selon l'une des revendications précédentes, **caractérisé en ce que** ladite au moins une unité de tête d'impression (12) présente au moins une unité de changement de buse (45) avec au moins deux buses (42, 42', 42"), qui est prévue pour un changement sans démontage entre lesdites au moins deux buses (42, 42', 42").

11. Dispositif d'impression 3D selon l'une des revendications précédentes, **caractérisé en ce que** ladite au moins une unité de tête d'impression (12) présente au moins un corps de base (46) et au moins une buse (42, 42', 42") qui est conçue pour être démontable séparément du corps de base (46).

12. Dispositif d'impression 3D selon l'une des revendications précédentes, **caractérisé en ce que** ladite au moins une unité de tête d'impression (12) présente au moins un corps de base (46) et au moins une extrémité chaude (48) qui est conçue pour être démontable séparément, en particulier sans outil, du corps de base (46).

13. Dispositif d'impression 3D selon l'une des revendications précédentes, **caractérisé par** une unité de séchage (50) qui est prévue pour sécher un matériau d'impression (16) avant son amenée à l'unité de tête d'impression (12).

14. Dispositif d'impression 3D selon l'une des revendications précédentes, **caractérisé par** un magasin (51) destiné à contenir différents matériaux d'impression (16).

15. Procédé pour faire fonctionner un dispositif d'impression 3D (10) selon l'une des revendications 1 à 14 avec un matériau d'impression (16) formé au moins partiellement d'une matière plastique à haute performance, à savoir une matière thermoplastique à haute performance.

16. Procédé selon la revendication 15, **caractérisé en ce qu'**un processus d'impression est commandé et/ou régulé par une unité de commande et/ou de régulation (44) du dispositif d'impression 3D (10).

17. Procédé selon la revendication 16, **caractérisé en ce que** différents éléments chauffants (30) de l'unité de chauffage surfacique (26) sont commandés en fonction d'au moins une grandeur caractéristique.

18. Procédé selon la revendication 17, **caractérisé en ce que** des zones partielles de l'objet d'impression (28) sont chauffées de manière ciblée par commande de différents éléments chauffants (30) de l'unité de chauffage surfacique (26).

19. Procédé selon l'une des revendications 15 à 18, **caractérisé en ce que** l'objet d'impression (28) est partiellement chauffé par l'unité de chauffage local (32) avant l'impression d'une autre couche.

20. Procédé selon l'une des revendications 15 à 19, **caractérisé en ce qu'**une vitesse d'impression est réglée dans ladite au moins une unité de tête d'impression (12) en fonction d'une pression du matériau d'impression (16).

21. Procédé selon l'une des revendications 15 à 20, **caractérisé en ce qu'**un processus de retrait de l'objet d'impression (28) pendant le refroidissement après un processus d'impression est calculé et/ou pris en compte avant et/ou pendant le processus d'impression.

22. Procédé selon l'une des revendications 16 à 21, **caractérisé en ce qu'**un objet d'impression (28) est au moins partiellement mesuré pendant le processus d'impression.

23. Procédé selon la revendication 22, **caractérisé en ce que** les paramètres d'impression d'un processus d'impression sont au moins partiellement adaptés en fonction d'un résultat de mesure.

24. Procédé selon l'une des revendications 15 à 23, **caractérisé en ce qu'**une couleur d'un objet d'impression (28) à imprimer est influencée par adaptation d'au moins un paramètre d'impression.

25. Procédé selon l'une des revendications 15 à 24, **caractérisé en ce qu'**un matériau d'impression (16) est séché avant une amenée à ladite au moins une unité de tête d'impression (12).

26. Procédé selon l'une des revendications 15 à 25, **caractérisé en ce que**, avant une impression d'un objet d'impression (28), une couche de stabilisation (52) ayant une surface de base plus grande qu'une surface de base d'une première couche de l'objet d'impression (28) est imprimée sur la plaque de base d'impression (22).

27. Procédé selon l'une des revendications 15 à 26, **caractérisé en ce que** la plaque de base d'impression (22) est refroidie activement après un procédé d'impression pour décoller l'objet d'impression (28).
